# EUROPEAN PATENT APPLICATION

(11) **EP 4 628 552 A1**
(43) Date of publication of application: **08.10.2025**
(21) Application number: 24168223.6
(22) Date of filing: 03.04.2024
(51) Int. Cl.: C09D 5/00

(54) **COMPOSITE MATERIAL, COMPOSITION FOR FORMING THE COMPOSITE MATERIAL, AND METHOD FOR FORMING THE COMPOSITE MATERIAL**

(71) Applicant: Daikin Industries, Ltd., Osaka-shi, Osaka 530-0001 (JP)
(72) Inventor: SAKOW, Dimitri, 40211 Düsseldorf (DE); SAHRANESHIN, Ameneh, 40211 Düsseldorf (DE); YOSHIDA, Tomohiro, Osaka, 530-0001 (JP); CELIC, Nilay, 40211 Düsseldorf (DE); KUZNETSOV, Volodymyr, 40211 Düsseldorf (DE)
(74) Representative: Hoffmann Eitle

(57) **Abstract**

The present invention provides Composite material comprising a metal substrate and provided on at least a part of at least one surface of the metal substrate, a UV-crosslinkable composition for forming a crosslinked coating on the metal substrate by UV irradiation, the UV-crosslinkable composition comprising (A) a (meth)acrylated fluoropolymer; (B) a (meth)acrylic monomer or oligomer, preferably having a surface tension of 40 dyne/cm or less and/or a viscosity of 15 cps (at 25°C) or less; (C) optionally, a fluorine-free (meth)acrylic polymer; and (D) optionally, an adhesion promoter; wherein one or more of the components (A), (B), (C) and (D) comprises a group that is capable of being decomposed upon exposure to UV radiation to form radicals, and/or wherein the composition comprises a compound (E) that is capable of being decomposed upon exposure to UV radiation to form radicals.

## Description

### Field of the Invention

The present invention relates to a composite material, a composition for forming the composite material, and a method for forming the composite material.

Composite materials are generally materials that are made from more than one component. Such composite materials can take the form of an intimate mixture or a matrix material with dispersed components, but can be formed of layers of different materials.

In the present invention, the term "composite material" is used to denote a material that comprises a metal substrate, such as a metal sheet or metal block, on which a coating is formed. In the present invention, the term "composite material" is thus synonymous to "coated metal substrate". The coating comprises or is derivable from a UV-crosslinkable composition for forming a crosslinked coating, and is present on a metal substrate, the metal substrate being in a shape of, for example, a sheet or casing.

### Background of the Invention

Composite materials in the form of coated metal substrates are known in numerous forms from the prior art, and they are often used to impart certain properties to the metal substrate. Examples of such composite materials are paint-coated steel sheets or casings where the paint provides a desired aesthetic impression or colour and/or provides protection against corrosion, or polymer-coated metal parts where the polymer coating provides certain properties, such as touch, softness, colour, insulating properties, or protection against environmental stress.

Where such composite materials are part of a bigger structure, element or machinery, they can generally be prepared in two ways, namely by first assembling the structure, element or machinery from several parts (e.g. several metal sheets), followed by coating the entire structure, or by assembling pre-coated parts. The first method is often preferred, since thereby a high-quality continuous and essentially defect-free impervious coating covering several parts (and often the complete structure, element or machinery) can be provided that is able to provide the desired effect such as colour or corrosion-resistance to the entire structure, element or machinery, whereas the second method using pre-coated parts often leads to an imperfect coating that exhibits cracks or scratches due to stress during assembly, or which is otherwise unable to provide the desired effect to the entire structure e.g. due to the absence of a sealing effect for the entire structure, element or machinery.

While thus the first method of coating a pre-assembled structure, element or machinery generally leads to better results, in particular when a physical barrier shielding the entire structure, element or machinery against e.g. water ingress or providing insulation against electrical charges is to be provided, this method requires that the structure, element or machinery is able to withstand the entire coating process. In particular in cases where a hermetical seal against external influences is desired it is often not possible to open the structure, element or machinery after the coating process without impairing the quality of the coating, so that all interior parts of the structure, element or machinery must be provided and assembled prior to the formation of the coating.

Coatings based on crosslinked polymers are typically formed by providing a layer of non-crosslinked material on a substrate, followed by crosslinking. The crosslinking generally requires certain conditions and is often effected by heating the coating formulation to high temperatures, often exceeding 100°C or even 150°C or 200°C. It is readily apparent that such a process is difficult or impossible to conduct for pre-assembled structures, elements or machinery that are heat-sensitive.

One example of such heat-sensitive structure, element or machinery are battery cells or secondary batteries e.g. for electric vehicles, which possess a casing made from a metal, typically aluminium or steel and which require an electrically insulating protective coating due to the high voltages that are in use today. Such a coating should preferably be defect-free, impervious for e.g. water, electrically insulating and provide shock protection. However, during the process for forming the coating, the pre-assembled battery must not be subjected to high temperatures exceeding 80°C or sometimes even 60°C, 50°C or 45°C, as otherwise battery degradation or impairment of the battery may occur. This forbids high-temperature curing or crosslinking processes for providing crosslinked coatings on such structures, elements or machinery, e.g. batteries or battery cells.

An alternative to thermal crosslinking is radiation-induced crosslinking. This can be achieved by incorporating a compound that is capable of being decomposed upon exposure to radiation, e.g., UV radiation, to form active species capable of initiating a crosslinking reaction (so-called photoinitiator). This suspends with the need for high temperatures for effecting crosslinking, and the radiation-induced (e.g., UV) crosslinking can be performed at acceptable temperatures, e.g. at room temperature (25°C). Yet, frequently also radiation (UV)-cured or crosslinked materials require a post-baking process to ensure high rigidity and sufficient crosslinking density.

Another factor to be considered is the quality and structure of the formed crosslinked coating. Where a solvent-based system is used, in a thermal crosslinking process the solvent is evaporated during crosslinking, often causing imperfections ("bubbles"). In a radiation-induced curing process, the solvent is not thermally evaporated, but still needs to be evaporated prior to and after radiation crosslinking. While less severe temperatures than compared to thermal crosslinking may be required, the solvent evaporation can also lead to a porous crosslinked coating that can have reduced performance properties, such as insulating properties, which could otherwise be achieved with a crosslinked coating having the same thickness. A slow solvent removal process, on the other hand, produces manufacturing time and may be economically disadvantageous. Accordingly, it would be desirable to use compositions that do not require such a solvent removal process.

Another factor that is of importance is the adhesion, cohesion and flexibility/brittleness of a crosslinked coating. Where such a coating is to perform vital functions where failure can lead to severe health risks, such as in the case of an insulating coating for high-voltage secondary batteries for electric vehicles, a high degree of adhesion is required in order to avoid delamination during use or upon exposure to external factors, such as shocks and impacts. For certain applications, long-lasting adhesion values in a pull-off test may be required to be as high as 3 MPa or higher, or even 5 MPa or higher.

Besides adhesion, also high cohesion is required in order prevent disintegration of the crosslinked coating during use or upon impact of other members, shocks etc. Further, a certain degree of impact resistance and low brittleness is required in order to avoid fracture or partial separation upon application of external stress or contact with other objects. While adhesion can be improved by pre-treatment of the metal substrate surface with certain chemicals such as by acid etching, it would be desired to reduce or eliminate the pre-treatment relying on additional chemicals in order to reduce the environmental load and to reduce safety hazards during manufacture.

Further, for insulating crosslinked coatings that are provided on pre-manufactured secondary batteries, highly insulating and voltage-resistant properties are required, such as represented by a dielectric strength of 3.0 kV or greater. While insulating properties and dielectric strength are relatively easy to obtain where the crosslinked coating is purely based on hydrocarbons, ionic species as may originate from radiation (e.g., UV) crosslinking agents may cause a lower dielectric strength, which may ultimately cause breakdown and failure of the crosslinked coating.

One example of a curable coating composition comprising a photo-initiator, one or more acrylate monomers, a urethane prepolymer, a crosslinker, one or more adhesion promoters and optionally further additives that can be used to form a coating on a battery component is described in WO 2021/119134 A1. This document describes specifically two example compositions that denote certain materials by generic terms such as "polyether urethane diacrylate" that cannot be associated with a specific material, and thus the examples of the document cannot be reproduced. Also, the example compositions contains large amounts of an inorganic filler, specifically silica, which reduces breakdown voltage and can be the origin of cohesive and/or adhesive failure. The compositions are only moderately isolating at 10¹⁴ Ω cm and are coated at relatively large thicknesses of 110 µm, where they exhibit a breakdown voltage (determined using a Hipot tester, 3-6 kV, 7 seconds, 0.1 mAmp limit) of 6 to 10 kV. Due to the components used here the coatings are not expected to have high chemical resistance to e.g. acids and organic materials, and while adhesion in a cross cut test is indicated as Class 1 after 100 hours and 500 hours at 85°C/85% RH, adhesion in a pull off test is not evaluated and in the absence of a pre-treatment of an aluminium substrate believed to be far less than 5 MPa.

### Problems to be solved by the present invention

In light of the problems encountered in the prior art as described above, the present invention aims at providing a composite article (or coated metal substrate), as well as a manufacturing method therefor, that is able to achieve one or more, two or more and preferably all of the following:
- High and long-lasting adhesion of a crosslinked coating to a metal substrate, preferably 5 MPa or more in a pull-off test;
- Combination of high adhesion and cohesion, as reflected by a classification of Class 0 (5B) or 1 (4B), preferably 0 (5B), in a cross-cut test according to ISO-2409 after crosslinking and also after 1 h in boiling water (100 °C).
- Highly insulating and voltage-resistant properties of a crosslinked coating, preferably having a dielectric strength of 3.0 kV or greater, preferably 3.5 kV or greater (at a thickness of 30 µm);
- The ability to form a crosslinked coating via a solvent-free process;
- The ability to form a crosslinked coating on a metal substrate without requiring a heat crosslinking requiring high temperatures, such as 45°C or higher or 50°C or higher.
- The ability to form a crosslinked coating directly on a metal substrate with or without a pre-treatment of the metal surface using additional chemicals.
- High chemical resistance of a crosslinked coating.
- The ability to combine chemical resistance of a crosslinked coating against acids and organic compounds, high adhesion, and high dielectric strength at low thickness of a crosslinked coating, thereby minimizing material costs and contribution to the overall volume of a battery or battery pack.

### Summary of the Invention

The inventors have performed diligent studies and have found out that one or more, two or more or all of the above objects can be solved by the following embodiments:
1. Composite material comprising
   I) a metal substrate and
   II) provided on at least a part of at least one surface of the metal substrate, a UV-crosslinkable composition for forming a crosslinked coating on the metal substrate by UV irradiation, the UV-crosslinkable composition comprising
      (A) a (meth)acrylated fluoropolymer;
      (B) a (meth)acrylic monomer or oligomer, preferably having a surface tension of 40 dyne/cm or less and/or a viscosity of 15 cps (at 25 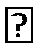 C) or less;
      (C) optionally, a fluorine-free (meth)acrylic polymer;
      (D) optionally, an adhesion promoter;
      wherein one or more of the components (A), (B), (C) and (D) comprises a group that is capable of being decomposed upon exposure to UV radiation to form radicals, and/or wherein the composition comprises a compound (E) that is capable of being decomposed upon exposure to UV radiation to form radicals.
2. The composite material according to Embodiment 1, wherein the (meth)acrylic monomer or oligomer (B) comprises one and preferably both of a monofunctional acrylic monomer and a di- or higher functional acrylic monomer, and/or wherein the components are present in the following amounts, expressed as weight% relative to the total weight of the composition:
   (A) 10-45
   (B) 40-90, preferably 50-85
   (C) 0-30, preferably 10 - 30
   (D) 0-10
   (E) 0-10.
3. The composite material according to Embodiment 1 or 2, wherein the (meth)acrylated fluoropolymer (A) is a copolymer that comprises two or more repeating units selected from the following classes of repeating units (a-1) to (a-5), provided that the repeating units comprise at least one repeating unit selected from the class(a-1) and at least one repeating unit selected from the class (a-4):
   (a-1) repeating units derived from an ethylenically unsaturated fluorinated monomer, which is preferably selected from tetrafluoroethylene, hexafluoropropylene and perfluoro(alkyl vinyl ether), which is more preferably tetrafluoroethylene;
   (a-2) repeating units derived from (meth)acrylic acid and/or crotonic acid, preferably methacrylic acid and/or crotonic acid;
   (a-3) repeating units derived from a C1-16 hydroxyalkyl vinyl ether or C1-16 hydroxyalkyl (meth)acrylate, preferably a C1-8 hydroxyalkyl (meth)acrylate or C1-8 hydroxyalkyl vinyl ether, more preferably a C1-8 vinyl ether;
   (a-4) repeating units having an urethane ( O CO-NH-), linkage and one or more ethylenically unsaturated groups, preferably(meth)acrylate groups;
   (a-5) repeating units derived from an C6 - 12 aromatic (meth)acrylate or C6 - 12 aromatic vinyl ether.
4. The composite material according to Embodiment 1, 2 or 3, wherein the metal substrate is made of aluminium or an aluminium alloy and/or wherein the metal substrate, which is preferably made from aluminium or an aluminium alloy, is roughened, preferably to exhibit a surface roughness Ra of 0.2µm to 0.5µm and a peak-to-valley roughness Rz of 1.5µm to 4.0µm.
5. The composite material according to Embodiment 4, wherein the surface roughness of the metal substrate is obtained by laser treatment.
6. The composite material according to any one of Embodiments 1 to 5, wherein the optional adhesion promotor is present in an amount of from 0.1 to 5% by mass, relative to the total mass of the curable composition, and wherein the adhesion promoter is preferably selected from the group consisting of silanes optionally having epoxy or (meth)acrylic functionalities; epoxies; isocyanates; thiols; and compounds having a phosphate group, more preferably selected from the group consisting of compounds having a phosphate group and an ethylenically unsaturated group.
7. The composite material according to any one of Embodiments 1 to 6, wherein the UV-crosslinkable composition is solvent-free.
8. A composite material having a crosslinked coating on at least one surface of a metal substrate, which composite material is obtainable by subjecting the composite material according to any one of the preceding embodiments to UV irradiation.
9. The composite material according to Embodiment 8, wherein the crosslinked coating exhibits an adhesion of 5 MPa or greater, preferably from 5 MPa to 10 MPa, and a dielectric strength of 3.5 kV or greater, preferably 3.5 kV to 10.0 kV.
10. A method for producing a composite material as defined in Embodiment 8 or 9, the method comprising
   i. optionally, roughening the surface of the metal substrate, preferably by laser treatment;
   ii. applying the UV-crosslinkable composition for forming a crosslinked coating on the metal substrate; and
   iii. irradiating the UV-crosslinkable composition with UV radiation.
11. The method for producing a composite material according to Embodiment 10, wherein the method further comprises, before applying the UV-crosslinkable composition, rinsing the surface of the metal substrate with a protic or aprotic solvent other than water; and/or performing a plasma treatment after the rinsing with a protic or aprotic solvent.
12. The method according to Embodiment 11, wherein the solvent used for rinsing the surface of the metal substrate is aprotic and is preferably an ether or ketone, and/or wherein the water content of the solvent is 100 ppm or less.
13. The composite material according to Embodiment 9, which is obtainable by the method as defined in any one of embodiments 10 to 12.
14. The composite material according to any one of Embodiments 1 to 9 or 13, or the method according to any one of embodiments 10 to 12, wherein the metal substrate is part of an electric component, preferably a secondary battery, more preferably a secondary battery for a battery-electric vehicle or hybrid electric vehicle.
15. An electric component, preferably a secondary battery, more preferably a secondary battery for a battery-electric vehicle or hybrid electric vehicle, comprising the composite material according to any one of embodiments 8, 9, 13 and 14.
16. A UV-crosslinkable composition for forming a crosslinked coating on the metal substrate by UV irradiation, the UV-crosslinkable composition comprising
   (A) a (meth)acrylated fluoropolymer;
   (B) optionally, a (meth)acrylic monomer or oligomer; preferably having a surface tension of 40 dyne/cm or less and/or a viscosity of 15 cps (at 25 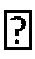 C) or less;
   (C) optionally, a fluorine-free (meth)acrylic polymer;
   (D) an adhesion promoter;

   wherein one or more of the components (A), (B), (C) and (D) comprises a group that is capable of being decomposed upon exposure to UV radiation to form radicals, and/or wherein the composition comprises a compound (E) that is capable of being decomposed upon exposure to UV radiation to form radicals;
   wherein the (meth)acrylated fluoropolymer (A) is a copolymer that comprises two or more repeating units selected from the following classes of repeating units (a-1) to (a-5), provided that the repeating units comprise at least one repeating unit selected from the class(a-1) and at least one repeating unit selected from the class (a-4):
      (a-1) repeating units derived from an ethylenically unsaturated fluorinated monomer, which is preferably selected from tetrafluoroethylene, hexafluoropropylene and perfluoro(alkyl vinyl ether), which is more preferably tetrafluoroethylene;
      (a-2) repeating units derived from (meth)acrylic acid and/or crotonic acid, preferably methacrylic acid and/or crotonic acid;
      (a-3) repeating units derived from a C1-16 hydroxyalkyl vinyl ether or C1-16 hydroxyalkyl (meth)acrylate, preferably a C1-8 hydroxyalkyl (meth)acrylate or C1-8 hydroxyalkyl vinyl ether, more preferably a C1-8 vinyl ether;
      (a-4) repeating units having an urethane ( O CO-NH-) linkage and one or more ethylenically unsaturated groups, preferably (meth)acrylic groups;
      (a-5) repeating units derived from an C6 - 12 aromatic (meth)acrylate or C6 - 12 aromatic vinyl ether; and
   wherein the adhesion promoter is preferably selected from the group consisting of silanes optionally having epoxy or (meth)acrylic functionalities; epoxies; isocyanates; thiols; and compounds having a phosphate group; more preferably selected from the group consisting of compounds having a phosphate group and an ethylenically unsaturated group.

Further and preferred aspects of the present invention will become derivable from the following detailed description.

### Definitions

The following definitions are to be used to interpret the meaning of the terms discussed in the description and recited in the claims.

As used herein, the indefinite article "a" indicates one as well as more than one and does not necessarily limit its referent noun to the singular.

As used herein, the term "about" means that the amount or value in question may be the specific value designated or some other value in its neighbourhood. Generally, the term "about" denoting a certain value is intended to denote a range within ± 5% of the value. As one example, the phrase "about 100" denotes a range of 100 ± 5, i.e. the range from 95 to 105. Generally, when the term "about" is used, it can be expected that similar results or effects according to the invention can be obtained within a range of ±5% of the indicated value.

As used herein, the term "and/or" means that either all or only one of the elements of said group may be present. For example, "A and/or B" shall mean "only A, or only B, or both A and B". In the case of "only A", the term also covers the possibility that B is absent, i.e. "only A, but not B".

The term "at least partially" is intended to denote that the following property is fulfilled to a certain extent or completely. Preferably, the term denotes that the following property is fulfilled to at least 50% or more, more preferably at least 75%, even more preferably at least 90 %. It may be preferable that the term denotes "completely".

The terms "substantially" and "essentially" are used to denote that the following feature, property, or parameter is either completely (entirely) or to a major degree realized or satisfied, the major degree meaning that the difference to the feature, property or parameter being completely satisfied is such that the difference does not adversely affect the intended result. Thus, depending on the circumstances, the term "substantially" or "essentially" preferably means e.g. at least 80%, at least 90 %, at least 95%, or 100%.

The term "comprising" as used herein is intended to be non-exclusive and open-ended. Thus, for instance a coating composition comprising a compound A may include other compounds besides A. However, the term "comprising" also covers the more restrictive meanings of "consisting essentially of" and "consisting of", so that for instance "a coating composition comprising compound A" may also (essentially) consist of the compound A.

Ranges given in the following include the upper and lower limits, and any value in between. For example, a range "1 to 10" includes the values 1 and 10, and any value in between, such as 2, 2.5, 4.7 or 8.3

The claimed subject matter can be characterized by physical properties, such as adhesion in a pull-off test or dielectric strength, which are typically defined by numerical values (e.g. expressed as MPa (Megapascal) in a pull-off test or as kV (kilovolt) for the dielectric strength). These numerical values are to be determined by test methods usual in the art or by the test methods that are described in the following detailed description, including the examples. Where different test methods give rise to different results, the test methods indicated in the description prevail. In case of a discrepancy between the general description and the methods used in the examples, the method in the examples prevails.

Unless indicated differently all physical properties are to be determined at standard pressure (1 atm) and room temperature (25°C ).

The term "composite material" denotes an entity that comprises or consists of a metal substrate and a UV-crosslinkable composition that is present on at least a part of at least one surface of the metal substrate and which is in direct contact therewith, as well as the respective entity after crosslinking of the UV-crosslinkable composition. In the simplest form, the composite material is in the form of a metal sheet on which, on at least a part of the surface on at least one side and in direct contact therewith, a UV-crosslinkable composition or a coating layer obtained by crosslinking the UV-crosslinkable is provided. The composite material may take the form of a casing or part of a casing enclosing an inner space, in which case the coating is present on at least a part of the outer sides of the casing.

A "metal substrate" denotes a material that is made from a single metal, such as aluminum or copper, or from a metal alloy, such as stainless steel. The metal substrate may take the form of a sheet, but may also be present in the form of a layer on a base material that is made from a material other than metal, e.g. a plastic material made from a general engineering plastic, a fibre-reinforced material, etc.

The term "(meth)acrylic" denotes compounds that have at least one group represented by the formula -O-C(O)-CR¹=CH₂ wherein R¹ is hydrogen or CH₃. A "(meth)acrylic group" is a group represented by this formula. An "acrylic compound" is a compound having a group of this formula wherein R¹ is hydrogen, and a "methacrylic compound" is a compound having a group of this formula wherein R¹ is CH₃. A "(meth)acrylic compound" is thus a compound having one or more, such as two or more or three or more (meth)acrylic groups represented by said formula.

The term "(meth)acrylated polymer" denotes a polymer compound that comprises a (meth)acrylic group, typically in a side chain. A (meth)acrylated polymer is for instance obtained by reaction of a reactive group, such as a hydroxyl group, in a polymer side chain with (meth)acrylic acid to form the corresponding ester, or by reaction of a reactive group, such as a hydroxyl group, in a polymer side chain with a compound having both a group that is reactive with said reactive group, e.g. an isocyanate group, and one or more (meth)acrylic groups, to thereby form a linkage and to provide the polymer with one or more (meth)acrylic groups in said side chain. Said linkage may be formed e.g. by a urethane (-NH-C(O)-O-) bond, which is formed by reaction of said hydroxyl group with said isocyanate group. Of course, also other types of linkages are possible.

The term "UV radiation" denotes electromagnetic radiation having a wavelength of 400 nm or shorter, such as 100 to 380 nm. The UV radiation may have a wavelength of 220 to 370 nm, such as 255nm to 355 nm.

The term "monomer" denotes compounds that have a polymerizable group, typically an ethylenically unsaturated group (C=C), preferably a terminal ethylenically unsaturated group ((R¹)(R²)C=CH₂). The term "oligomer" denotes compounds that have a structure that comprises 2-10 repeating units derived from one or more monomer(s). The term "polymer" denotes compounds that have a structure that comprises more than 10 repeating units (in total) derived from one or more monomer(s).

The term "fluoropolymer" denotes a polymer that is derived from a monomer having at least one, and preferably two or more, fluorine atom(s).

Where a compound or group is defined by the number of carbon atoms, such C₁₋₆ alkyl, and is further defined as being substituted or unsubstituted (which is identical to "optionally substituted"), any carbon atom in the optional substituent is not to be considered for the calculation of the number of carbon atoms of the respective compound or group.

The term "solvent" is defined as including any compound that is not a monomer, oligomer or polymer or other compound that is positively recited in the claims and which has a boing point (at 1 atm) of 250°C less, such as 200°C or less.

The term "protic" denotes solvents that possess a group wherein a hydrogen atom is bound to a heteroatom selected from N, O and S, and which is thus capable of undergoing hydrogen bonding and releasing a proton. Protic solvents include in particular those having a hydroxyl (OH) group, such as alcohols and organic acids. The term "aprotic" denotes compounds wherein such a group is absent, such as aliphatic (including straight, branched and cyclic) and aromatic hydrocarbons, aromatic and aliphatic heterocyclic compounds such as pyridine and N-methyl pyrrolidone, ethers, esters, ketones, chlorinated hydrocarbons, nitriles, etc.

A battery-electric hybrid vehicle is a vehicle that is propelled by an electric motor receiving a current from a battery and another power source, typically an internal combustion engine based on petrol or diesel that is simultaneously or intermittently used to propel the vehicle.

A battery-electric vehicle is a vehicle that is propelled by an electric motor driven by a battery and which does not possess another power source used to propel the vehicle, such as an internal combustion engine based on petrol or diesel.

### Detailed Description of the Invention

The present invention has been completed based on the inventors' finding that the problems discussed above can be solved by a composite material comprising a metal substrate on which is provided a specific UV-crosslinkable composition, respectively a crosslinked product obtained therefrom. This UV-crosslinkable composition is capable of providing a crosslinked product that has a high dielectric strength and which has a high pull-off adhesion to the metal substrate, and which can be formed without the need for a high-temperature crosslinking process and without the need for employing solvents that may impair the coating's quality after evaporation.

It was further found that these properties, in particular high and long-lasting adhesion to a metal substrate as represented by the pull-off strength, can be improved further by pre-treating the metal substrate surface, as will be explained in more detail below, and/or by including an adhesion promoter into the UV-crosslinkable composition. The best results are obtained when the pre-treatment of the metal substrate surface is combined with the presence of an adhesion promoter.

The components forming the composite material of the present invention will be described in detail below.

### I) Metal Substrate

The metal substrate is made (i.e. consists of) a metal or a metal alloy. Here, the metal or metal alloy is selected from those that are suitable for the intended application, and the metal may be selected from all suitable types, including aluminium, magnesium, copper, iron, zinc, gold, silver, tin, titanium, tungsten, nickel, niobium, chromium, vanadium, and cobalt, as well as alloys thereof, including e.g. stainless steel. Here, the stainless steel may be of any grade as listed in the international standard ISO 15510:2010.

The preferred metal substrates are made from (i.e. consist of) aluminium, aluminium alloys or stainless steel in view of mechanical properties and costs, and aluminium and aluminium alloys are more preferable in terms of mechanical properties, cost and weight.

The metal substrate may take the form of a sheet, e.g. having a thickness of 0.1 to 5 mm, such as 0.5 to 4 mm or 0.8 to 2.5 mm. The metal substrate may be, or may be part of, a casing. In one embodiment, the casing is, or is part of, a battery casing, such as a battery casing of a battery-electric vehicle or battery-electric hybrid vehicle.

The metal substrate may be smooth but is preferably roughened. Here, the term "roughened" denotes that the surface of the metal substrate on which the UV-crosslinkable composition is to be provided or is formed has a surface roughness as characterized by the following
Ra: 0.10µm or greater, such as 0.10 µm - 1.00 µm, preferably 0. 12 µm or greater, such as 0.12µm - 0.60 µm, more preferably 0.15 µm or greater, such as 0.15 µm to 0.40 µm, and most preferably 0.18 µm or greater, such as 0.18 µm - 0.35 µm; and
Rz: 0.50 µm or greater, such as 0.50 - 4.00 µm, preferably 1.00 µm or greater, such as 1.00 µm to 3.50 µm, more preferably 1.75 µm or greater, such as 1.75 µm to 3.25 µm, and most preferably 2.10 µm or greater, such as 2.10 µm to 3.00 µm.

A metal substrate surface is thus considered "rough" or "roughened" if it has both an Ra of 0.10µm or greater and an Rz of 0.50 µm or greater. A surface wherein either or both of Ra and Rz is/are below the respective thresholds is considered a "smooth" surface.

The respective ranges above can be combined in any manner, so that e.g. a "preferred" range for Ra can be combined with the general or the "more preferred" or "most preferred" range for Rz, but preferably the ranges are combined on the same level of preference.

In the above, Ra denotes the arithmetic average roughness, which is generally defined as the absolute average relative to the base length. For simplicity, the Ra value indicates the average surface roughness for the length of the measurement performed, i.e., the average difference between peaks and valleys. Ra and Rz can be determined by any method known in the art, and for example the method in accordance with EN ISO 4287:1997 can be used. In practice, this can often be performed by using an automatic surface roughness tester as available for instance from PCE Instruments (Roughness Tester PCE-RT 1200). Another method that can be used is a surface roughness analysis using an AFM (atomic force microscope), e.g. available from Park Systems, model NX10 AFM, equipped with PPP-NCHR Cantilever (at a Force Constant 42 N/m, Frequency 330 kHz) in non-contact mode (set point 7-10 nm).

Such a surface roughness can be obtained by chemical, mechanical or laser treatment of the metal substrate surface. Since a laser treatment can be rapidly performed, is associated with little wear, does not require the use of hazardous substances, and leads to desired results in a short period of time, a laser roughening treatment is preferred.

It is one finding of the present invention that a roughening treatment, in particular a laser roughening treatment, leading to Ra and Rz values in the above-indicated ranges, which are relatively low and lower than typically suggested in prior documents that employ a rough surface for improving adhesion of a coating formed thereon, is sufficient achieve very high pull-off adhesion values when combined with the UV-crosslinkable composition of the present invention to be described later, especially and optionally in combination with a plasma treatment and/or solvent rinse prior to the application of the UV-crosslinkable composition on at least a part of at least one surface of the metal substrate.

It is to be noted that the upper limits indicated above are non-binding, and that also metal substrates with rough surfaces that exceed the upper limits can be employed. There is hence generally no upper limit on Ra and/or Rz, and the upper limit of Ra can e.g. be 10.0 µm or less, 7.5 µm or less, 7.0 µm or less, 6.5 µm or less, 6.0 µm or less, 5.5 µm or less, 5.0 µm or less, or 4.5 µm or less. Independently or additionally, the upper limit of Rz can be 10.0 µm or less, 7.5 µm or less, 7.0 µm or less, 6.5 µm or less, 6.0 µm or less, 5.5 µm or less, 5.0 µm or less, or 4.5 µm or less.

### II) UV-crosslinkable composition

The UV-crosslinkable composition that is provided on the metal substrate in the composite material of the present invention comprises at least the following components:
(A) a (meth)acrylated fluoropolymer;
(B) a (meth)acrylic monomer or oligomer;
(C) optionally, a fluorine-free polymer;
(D) optionally, an adhesion promoter;
wherein one or more of the components (A), (B), (C) and (D) comprises a group that is capable of being decomposed upon exposure to UV radiation to from radicals, and/or wherein the composition comprises a compound (E) that is capable of being decomposed upon exposure to UV radiation to form radicals.

In one embodiment, the components (A), (B), and optionally (C), (D), and (E) form 80% by weight or more of the total of the composition, such as 90% by weight or more, e.g. 95% by weight or more, 98% by weight or more, or 99% by weight or more. In one embodiment, the UV-crosslinkable composition consists of the components (A), (B), and optionally (C), (D), and (E), so that no further components beyond these components are present.

The respective components are preferably comprised in the following amounts, expressed as % by weight relative to the total of the composition:
(A) 10 - 45, preferably 15 - 40, more preferably 20 - 35, such as 20-30;
(B) 40 - 90, preferably 45 - 85, more preferably 50 - 80;
(C) 0 - 30, preferably 5 - 30, more preferably 10 - 30, such as 10 - 20;
(D) 0 -10, preferably 0 -8, more preferably 0 - 5;
(E) 0 -10, preferably 0.1 - 5, more preferably 0.2 - 4, such as 0.3 - 3.

Each of the respective components will be described in the following.

In one embodiment, the UV-crosslinkable composition has a solvent content of 20% by weight or less, such as 15% by weight or 10% by weight or less, relative to the total weight of the UV-crosslinkable composition. In one embodiment, the UV-crosslinkable composition is solvent-free.

### (A) The (meth)acrylated fluoropolymer

The (meth)acrylated fluoropolymer (A) denotes a polymer compound that has one or more (meth)acrylic groups in its structure in one or more side chains. Here, the side chain(s) comprising one or more (meth)acrylic groups can be represented by the formula L[-OC(O)-CR¹-CH=CH₂]ₙ, where L is a linking group connecting to the polymer main chain, R¹ is hydrogen or a methyl group, and n is an integer denoting the number of (meth)acrylic groups in the polymer side chain and which is 1 or higher, such as 2, 3, 4, 5, or more than 5. L is not particularly limited, but in one preferred aspect is a group containing one or more NH-C(O)-O linkages. Examples of such groups L include those represented by L¹-NH-C(O)-O-L², where one of L¹ and L² is a linking group to the (meth)acrylic group(s), e.g. a C₁₋₂₀ hydrocarbon group such as an optionally substituted linear, branched or cyclic alkylene group, an optionally substituted C₆-C₂₀ arylene groups or linker group obtained by combining an optionally substituted linear, branched or cyclic alkylene group and an optionally substituted C₆-C₂₀ arylene group, and the other one of L¹ and L² is a linking group to the polymer main chain, e.g. an optionally substituted C₁₋₂₀ hydrocarbon group such as a linear, branched or cyclic alkylene group, an optionally substituted C₆-C₂₀ arylene groups or linker group obtained by combining an optionally substituted linear, branched or cyclic alkylene group and an optionally substituted C₆-C₂₀ arylene group. Here, the term "optionally substituted" denotes that the respective group may be unsubstituted or substituted, such as substituted by 1 to 8, preferably 1 to 4, such as 1 or 2 substituents, where the substituents are preferably selected from the group consisting of a hydroxyl group, a halogen atom (F, Cl, or I, preferably F), a cyano group, an isocyanate group, a carbamoyl group, an amino group (-NH₂), a nitro group, and a thiol group.

The (meth)acrylated fluoropolymer (A) may, in terms of the compounds from which the polymer main chain is formed, be derived from a homopolymer or from a copolymer (including block and random copolymers), but is preferably derived from a copolymer, more preferably a random copolymer.

Where the (meth)acrylated fluoropolymer (A) is derived from a homopolymer, the homopolymer is derived from a monomer having at least one, preferably two fluorine-containing groups and one or more functional groups (a) that can subsequently be reacted to provide for one or more (meth)acrylic groups in the polymer. The subsequent reaction with a compound having a group capable of reaction with said group (a) and having one or more (meth)acrylic groups then yields the (meth)acrylated fluoropolymer (A).

The (meth)acrylated fluoropolymer (A) is preferably obtainable by (meth)acrylation of a copolymer obtained by copolymerizing
(i) one or more monomer(s) having a functional group (a) that can subsequently be reacted to provide for one or more (meth)acrylic groups in the polymer, for example, a hydroxyl group, isocyanate group or glycidyl group,
(ii) at least one ethylenically unsaturated fluorine-containing monomer, and
(iii) optionally, yet preferably, further fluorine-free monomers (iii) not containing a functional group (a).

Here, the monomer (i) containing one or more groups (a) may or may not contain fluorine. The copolymer preferably includes repeating units derived from one or more monomers (iii) that do not contain fluorine and which do not contain the group (a) (also referred to as "fluorine-free monomer not containing a group (a)") . The monomers from which the copolymer is derived are preferably ethylenically unsaturated monomers, and the copolymer may be of block or random form, but is preferably of random form.

The copolymer from which the (meth)acrylated fluoropolymer (A) is derived contains repeating units that are derived from a monomer (i) having one or more functional groups (a) that can subsequently be reacted to provide for one or more (meth)acrylic groups in the polymer, to thereby form the (meth)acrylated fluoropolymer (A). Examples of such groups (a) include OH, CN, NCO, halogens other than fluorine, such as chlorine or iodine, SH, CN, NH₂, NHR², NR²R³ (wherein R² and R³ are independently selected from alkyl groups having 1 to 6 carbon atoms that may optionally be substituted by one or two hydroxyl groups), SCN, NCO, and halogen (F, Cl, Br, or I), and preferably a hydroxyl group or NCO group. The monomer having one or more functional groups (a) typically contains an ethylenically unsaturated group, and may for instance be a (meth)acrylic compound having one or more functional groups (a) or may be a vinyl ether compound having one or more functional groups in the group bound to the vinyl group via the ether bond. Specific examples of such monomers wherein the group (a) is a hydroxyl group include 2-hydroxyethyl (meth)acrylate, 2-hydroxypropyl (meth)acrylate, 3-hydroxypropyl (meth)acrylate, 4-hydroxybutyl (meth)acrylate, 5-hydroxypentyl (meth)acrylate, 6-hydroxyhexyl (meth)acrylate, 4-hydroxy-cyclohexyl (meth)acrylate, as well as the correspondingly substituted vinyl ethers, such as 2-hydroxyethyl vinyl ether, 2-hydroxypropyl vinyl ether, 3-hydroxypropyl vinyl ether, 4-hydroxybutyl vinyl ether, 5-hydroxypentyl vinyl ether, 6-hydroxyhexyl vinyl ether, and 4-hydroxy-cyclohexyl vinyl ether. Other examples wherein the group (a) is a glycidyl group include allyl (meth)acrylate, glycidyl (meth)acrylate, and glycidyl vinyl ether. Examples wherein the group (a) is an isocyanate group include those listed above for the hydroxyl group as group (a), but which have an isocyanate group instead of a hydroxyl group (e.g. 2-isocyanatoethyl (meth)acrylate).

The (meth)acrylated fluoropolymer (A) having the (meth)acrylic groups in one or more side chains represented by the formula L[-OC(O)-CR¹-CH=CH₂]ₙ can be obtained by reacting the functional group (a), present in the repeating unit derived from the monomer having the functional group (a), with a corresponding (meth)acrylic compound having a group capable of reacting with the group (a). As one example, where the precursor copolymer contains a hydroxyl group in the side chain (e.g. by incorporating repeating units derived from a compound such as 6-hydroxyhexyl (meth)acrylate or 4-hydroxybutyl vinyl ether), this hydroxyl group as the group (a) can be reacted with an isocyanate compound having also one or more (meth)acrylate groups, such as 2-isocyanato ethyl (meth)acrylate. In an analogous manner, also other groups (a) can be reacted with suitable reaction partners having one or more (meth)acrylate groups. Here, it is possible but not required to convert all groups (a) to groups containing a (meth)acrylic group, and only a portion thereof can be converted. This portion (also designated as "degree of (meth)acrylation of the (meth)acrylated fluoropolymer (A)") is higher than 0 mol%, but is typically less than 100%, such as 10mol% to 90 mol% or 20 mol% to 80 mol%, relative to all (100%) of all functional groups (a), such as hydroxyl groups. By varying the degree of (meth)acrylation of the (meth)acrylated fluoropolymer (A) it is possible to influence crosslinking density, hardness and other properties of the resulting coating after crosslinking.

The content of repeating units having one or more (meth)acrylic groups in the side chain in the (meth)acrylated fluoropolymer (A) is preferably 3% by mole or more of all repeating units of the (meth)acrylic fluoropolymer (A), such as 5 %by mole or more or 10 %by mole or more, preferably 15 %by mole or more, such as 20 %by mole or more, relative to all repeating units of the (meth)acrylic fluoropolymer (A). The upper threshold is not particularly limited, but is typically 80 mol% or less, such as 60 mol% or less, 50 mol% or less, 45 mol% or less or 40 mol% or less, but can also be as low as 35 mol% or less or 30 mol% or less.

Non-limiting examples of (iii) the fluorine-free monomer not containing a group (a) include (meth)acrylic monomers, vinyl ether monomers, vinyl ester monomers, such as C₁ - ₂₀ alkyl vinyl esters, crotonic acid, crotonic acid esters, and alpha-olefins.

The (meth)acrylic monomers can be one or more, such as two or more or three or more, selected from the group consisting of compounds represented by the formula CH₂=CH-C(O)O-R² or CH₂=C(CH₃)-C(O)-R², preferably CH₂=CH-C(O)O-R², wherein R² is hydrogen, a hydrocarbon group, such as a straight, branched or cyclic alkyl group having 1 to 16, preferably 2 to 12 and more preferably 3 to 10 carbon atoms, or a benzyl group. Specific examples include acrylic acid, methacrylic acid, methyl (meth)acrylate, ethyl (meth)acrylate, n-propyl (meth)acrylate, isopropyl (meth)acrylate, n-butyl (meth)acrylate, isobutyl (meth)acrylate, sec-butyl (meth)acrylate, t-butyl (meth)acrylate, n-pentyl (meth)acrylate, 3-methyl butyl (meth)acrylate, n-hexyl (meth)acrylate, 2-ethyl-n-hexyl (meth)acrylate, n-octyl (meth)acrylate, cyclohexyl (meth)acrylate, isobornyl (meth)acrylate, benzyl (meth)acrylate, 2-phenoxyethyl (meth)acrylate, stearyl (meth)acrylate, lauryl (meth)acrylate, 2-ethylhexyl (meth)acrylate, ethoxyethyl (meth)acrylate, methoxyethyl (meth)acrylate, tetrahydrofurfuryl (meth)acrylate, N,N-dimethylaminoethyl (meth)acrylate, N,N-diethylaminoethyl acrylate, cyclohexyl (meth)acrylate, 4-(1,1-dimethylethyl)cyclohexyl (meth)acrylate, (1,1-dimethyl-3-oxobutyl)(meth)acrylate, (5-Ethyl-1,3-dioxan-5-yl)methyl acrylate, 2-acetoacetoxyethyl (meth)acrylate, 2-methoxyethyl (meth)acrylate, and 2-ethoxyethyl (meth)acrylate. Of these, the respective acrylates are preferred over the methacrylates, as the acrylate allow obtaining a lower glass transition temperature and are less prone to brittleness and the occurrence of cracks. However, methacrylates generally give tougher materials and may thus be incorporated if high impact resistance is desired. Only one of the (meth)acrylate group containing monomers can be used, but it is also possible to use a combination of two or more (meth)acrylate group containing monomers.

Examples of crotonic acid and crotonic acid esters include those of formula CH(CH₃)=CH-C(O)O-R², wherein R² is hydrogen, a hydrocarbon group, such as a straight, branched or cyclic alkyl group having 1 to 16, preferably 2 to 12 and more preferably 3 to 10 carbon atoms, or a benzyl group.

Examples of vinyl esters include those of formula CH₂=CH-OC(O)R², wherein R² is a hydrocarbon group, such as a straight, branched or cyclic alkyl group having 1 to 20, e.g. 1 -18, preferably 2 to 12 and more preferably 3 to 10 carbon atoms, or a benzyl group.

Examples of the vinyl ether monomers as (iii) the fluorine-free monomer not containing a group (a) include C₁₋₂₀ alkyl vinyl ethers such methyl vinyl ether, ethyl vinyl ether, propyl vinyl ether etc., and butyl vinyl ether. Here, the alkyl group may be substituted or may be substituted, but is preferably unsubstituted. These vinyl ethers may be represented by the formula CH₂=CH-OR⁴ wherein R⁴ is a residue that can be selected from large variety of groups, including substituted and unsubstituted C1-20 alkyl groups and C₆₋₁₈ aromatic groups, such as methyl, ethyl, propyl, butyl, pentyl, hexyl, heptyl, octyl, nonyl, decyl, or benzyl.

Examples of alpha-olefins include C2-20, preferably C2-10 alpha-olefins such as ethylene, propylene, 1-butene, and 1-hexene.

The at least one ethylenically unsaturated fluorine-containing monomer (ii) needs to be copolymerizable with the monomer containing the functional group (a) and, if present, the fluorine-free monomer not containing a group (a), but is otherwise not limited. Examples of the ethylenically unsaturated fluorine-containing monomer (iii) include without limitation compounds such as tetrafluoroethylene (TFE), chlorotrifluoroethylene, hexafluoropropylene (HFP), fluoroalkyl vinyl ethers, perfluoroalkyl vinyl ethers (PAVE), e.g. perfluoro (methyl vinyl ether) and perfluoro (propyl vinyl ether), and vinylidene fluoride, and one or more of these compounds may be used. Here, the alkyl group in the fluoroalkyl vinyl ethers and perfluoroalkyl vinyl ethers has preferably 1 - 12, more preferably 1 -8, such as 1 to 4 carbon atoms. The ethylenically unsaturated fluorine-containing monomer preferably includes TFE and/or HFP. Examples of a combination of two or more units comprising a TFE unit include TFE/HFP and TFE/PAVE.

In one embodiment the (meth)arylated fluoropolymer (A) may comprise repeating units derived from one, two or three of TFE, HFP and vinylidene fluoride. In one embodiment, the ethylenically unsaturated fluorine-containing monomer is TFE.

Further examples of other repeating units that may be included in the copolymer (A) include those that have an ethylenically unsaturated group in a side chain, as this facilitates crosslinking reactivity.

In one aspect of the present invention, the (meth)acrylated fluropolymer (A) is a reaction product of a copolymer (A-1) comprising a fluoroolefin unit and a radically polymerizable hydroxyl group-containing unsaturated monomer unit, and a compound (A-2) having one isocyanate group and at least one radically polymerizable unsaturated group, as described in EP 2 108 667 A1.

Here, examples of the fluoroolefin unit in the fluorine-containing copolymer (A-1) having hydroxyl group are one or more of a tetrafluoroethylene (TFE) unit, a chlorotrifluoroethylene (CTFE) unit, a vinyl fluoride (VF) unit, a vinylidene fluoride (VdF) unit, a hexafluoropropylene (HFP) unit, a trifluoroethylene (TrFE) unit, and perfluoro(alkyl vinyl ether) (PAVE) units. Examples of the PAVE 0units are a perfluoro(methyl vinyl ether) unit and a perfluoro(propyl vinyl ether) unit. Examples of a combination of two or more units comprising a TFE unit are a TFE/HFP unit, a TFE/PAVE unit, a TFE/ethylene unit, a TFE/vinyl ether unit, a TFE/vinyl ester unit, a TFE/vinyl ester/vinyl ether unit and a TFE/vinyl ether/allyl ether unit. Among these, from the viewpoint of satisfactory mixing of the ethylenically unsaturated group containing monomer, a TFE/ethylene unit, a TFE/vinyl ether unit, a TFE/vinyl ester unit, a TFE/vinyl ester/vinyl ether unit and a TFE/vinyl ether/allyl ether unit are preferred. Examples of a combination of two or more units comprising a CTFE unit are a CTFE/HFP unit, a CTFE/PAVE unit, a CTFE/ethylene unit, a CTFE/vinyl ether unit, a CTFE/vinyl ester unit, a CTFE/vinyl ester/vinyl ether unit and a CTFE/vinyl ether/allyl ether unit. Among these, from the viewpoint of satisfactory mixing to the ethylenically unsaturated group-containing monomer, a CTFE/ethylene unit, a CTFE/vinyl ether unit, a CTFE/vinyl ester unit, a CTFE/vinyl ester/vinyl ether unit and a CTFE/vinyl ether/allyl ether unit are preferred. Similarly, examples of a combination of two or more units comprising a HFP unit are a CTFE/HFP unit, a TFE/HFP unit, a HFP/vinyl ether unit, a HFP/vinyl ester unit, a HFP/vinyl ester/vinyl ether unit and a HFP/vinyl ether/allyl ether unit. Among these, from the viewpoint of satisfactory mixing to the ethylenically unsaturated group-containing monomer, a HFP/vinyl ether unit, a HFP/vinyl ester unit, a HFP/vinyl ester/vinyl ether unit and a HFP/vinyl ether/allyl ether unit are preferred. Examples of a combination of two or more units comprising a VdF unit are a VdF/TFE unit, a VdF/HFP unit, a VdF/TFE/HFP unit, a VdF/CTFE unit, a VdF/TFE/PAVE unit, a VdF/CTFE/TFE unit and a VdF/CTFE/HFP unit. Among these, from the viewpoint of satisfactory mixing to the ethylenically unsaturated group-containing monomer, it is preferable that a VdF unit is contained in an amount of not less than 50 % by mole in the polymer.

Also in this embodiment, the fluorine-containing copolymer (A-1) may include repeating units derived from non-fluorine-containing vinyl ethers and/or non-fluorine-containing vinyl esters having no hydroxyl group represented by the formula (II): 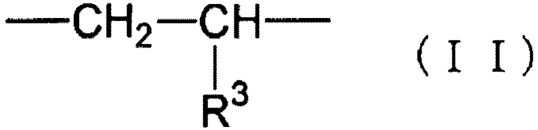 wherein R³ is -OR⁴ -OCOR⁴, wherein R4 is alkyl. Examples of R⁴ in Formula II are linear, branched or cyclic alkyl groups having 1-8 carbon atoms. Preferred examples include repeating units derived from cyclohexyl vinyl ether, methyl vinyl ether, ethyl vinyl ether, propyl vinyl ether, n-butyl vinyl ether, isobutyl vinyl ether, vinyl acetate, vinyl propionate, vinyl butyrate, vinyl isobutyrate, vinyl pivalate, vinyl caproate, vinyl versatate, vinyl laurate, vinyl stearate and vinyl cyclohexyl carboxylate. Among these, from the viewpoint of chemical resistance, preferred are nonaromatic carboxylic acid vinyl esters, especially vinyl esters of carboxylic acid having 6 or more carbon atoms, further preferably vinyl esters of carboxylic acid having 9 or more carbon atoms. In carboxylic acid vinyl esters, an upper limit of the number of carbon atoms of carboxylic acid is preferably 20 or less, further preferably 15 or less. Specifically vinyl versatate is most preferred.

Examples of the fluorine-containing copolymer (A-1) having hydroxyl group are 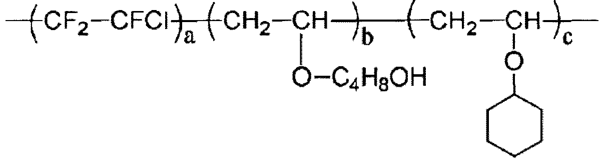 wherein a molar ratio of a, b and c is a:b:c=40 to 60:3 to 15:5 to 45; 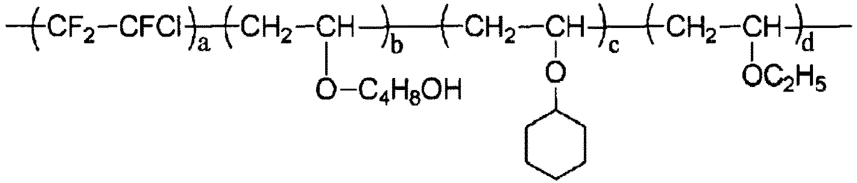 wherein a molar ratio of a, b, c and d is a:b:c:d=40 to 60:3 to 15:5 to 45:5 to 45; 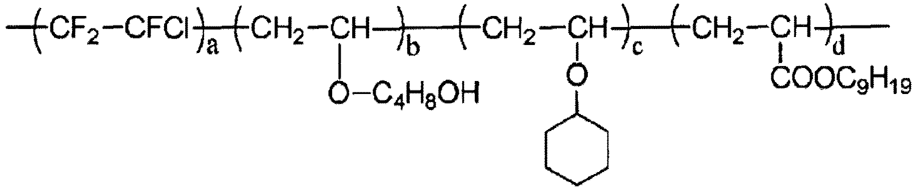 wherein a molar ratio of a, b, c and d is a:b:c:d=40 to 60:3 to 15:5 to 45:5 to 45 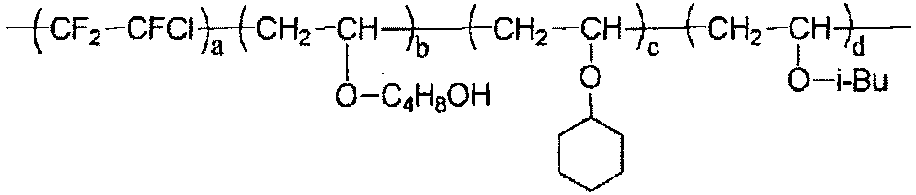 wherein a molar ratio of a, b, c and d is a:b:c:d=40 to 60:3 to 15:5 to 45:5 to 45, and i-Bu represents an isobutyl group; tetrafluoroethylene/vinyl versatate/hydroxybutyl vinyl ether; tetrafluoroethylene/vinyl versatate/hydroxyethyl vinyl ether/vinyl tert-butyl benzoate; tetrafluoroethylene/vinyl versatate/hydroxybutyl vinyl ether/crotonic acid; and tetrafluoroethylene/ vinyl versatate/hydroxyethyl vinyl ether/vinyl benzoate/crotonic acid.

Examples of the isocyanate group-containing unsaturated compound (A-2) are alkyl vinyl ethers and alkyl allyl ethers represented by the formula (III): 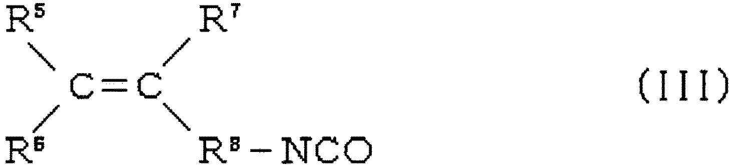 wherein R⁵, R⁶ and R⁷ are the same or different and each is H, F, Cl or C₁₋₄-alkyl, and R⁸ is -COO-R⁹-, -OCO-R⁹- or -O-R⁹, wherein R⁹ is C₁₋₂₀-alkyl. Specific examples of the isocyanate group-containing unsaturated compound (A-2) are 2-isocyanatoethyl acrylate, 2-isocyanatoethyl methacrylate, 4-isocyanatobutyl acrylate and 4-isocyanatobutyl methacrylate.

Further, there are reaction products prepared by allowing polyisocyanate to react with unsaturated monoalcohol and having one isocyanate group. Examples of polyisocyanate are 2,4-tolylene diisocyanate, 2,6-tolylene diisocyanate, a mixture of isocyanates of 2,4-tolylene diisocyanate and 2,6-tolylene diisocyanate, P,P'-diphenylmethane diisocyanate, 1,5-naphthylene diisocyanate, p-phenylene diisocyanate, 1,6-hexamethylene diisocyanate, isophorone diisocyanate and hydrogenated xylylene diisocyanate. Examples of unsaturated monoalcohol are monoalcohols having acryloyl group or methacryloyl group such as 2-hydroxyethyl acrylate, 2-hydroxyethyl methacrylate, 2-hydroxypropyl acrylate, 2-hydroxypropyl methacrylate, 4-hydroxybutyl acrylate and 4-hydroxybutyl methacrylate, and monoalcohols having allyl group such as allyl alcohol, allyl cello solve and trimethylpropane diallyl ether. Among these, from the viewpoint of easy synthesis and high reactivity, 2-isocyanateethyl acrylate or 2-isocyanateethyl methacrylate is preferred.

The fluorine content of the (meth)acrylated fluoropolymer (A) is preferably not less than 2 % by mass, more preferably not less than 5 % by mass, further preferably not less than 10 % by mass, from the viewpoint of satisfactory weather resistance, water- and oil-repellency and stain-proofing property. Also, the fluorine content is preferably not more than 50% by mass, more preferably not more than 30% by mass, further preferably not more than 25 % by mass. The fluorine content can be determined by an ion chromatogrph method, e.g. by decomposing by combustion at a set combustion furnace temperature of 900°C in an air stream, absorbing the generated gas using an absorption can, adjusting to a defined volume using pure water, and determining the fluorine content in the solution was determined using an ion chromatograph method.

The number average molecular weight of the (meth)acrylated fluoropolymer (A), determined by gel permeation chromatography using a polystyrene standard, is preferably not less than 1,000, more preferably not less than 2,000, further preferably not less than 3,000, from the viewpoint of strength and surface hardness. Also, the number average molecular weight is preferably not more than 100,000 from the viewpoint that handling of it is difficult since its viscosity is increased when more than 100,000, more preferably not more than 50,000 further preferably not more than 30,000.

In a preferred embodiment, the (meth)acrylated fluoropolymer (A) comprises repeating units selected from one, two, three, four or all five the following classes of repeating units (a-1) to (a-5), provided that the repeating units comprise at least one repeating unit selected from the class (a-1) and at least one repeating unit selected from the class (a-4):
(a-1) repeating units derived from an ethylenically unsaturated fluorinated monomer, which is preferably selected from tetrafluoroethylene, hexafluoropropylene and perfluoro(alkyl vinyl ether), which is more preferably tetrafluoroethylene;
(a-2) repeating units derived from (meth)acrylic acid and/or crotonic acid, preferably methacrylic acid and/or crotonic acid,
(a-3) repeating units derived from a C₁₋₁₆ hydroxyalkyl vinyl ether or C₁₋₁₆ hydroxyalkyl (meth)acrylate, preferably a C₁₋₈ hydroxyalkyl (meth)acrylate or C₁₋₈ hydroxyalkyl vinyl ether, more preferably a C₁₋₈ hydroxyalkyl vinyl ether;
(a-4) repeating units having an urethane (-OC(O)-NH-) linkage and one or more ethylenically unsaturated groups, preferably (meth)acrylic groups;
(a-5) repeating units derived from an C_{6 - 12} aromatic (meth)acrylate or C_{6 - 12} aromatic vinyl ether.

As is self-evident to any skilled reader, the properties in use of the (meth)acrylated fluoropolymer (A), e.g. the degree of chemical resistance obtained thereby and/or the compatibility with the other components of the coating composition, can within certain boundaries be adjusted by changing the nature and amount of the repeating units. It has been observed that particularly suitable properties can be obtained if the (meth)acrylated fluoropolymer (A) comprises repeating units derived from (1) TFE and/or HFP, (2) acrylic acid, methacrylic acid, alkyl vinyl ether and/or crotonic acid, (3) a C_{2 -6} alkyl (meth)acrylate substituted with a hydroxy group at the terminal carbon atom of the alkyl group and/or a C2-6 alkyl vinyl ether substituted with a hydroxy group at the terminal carbon atom of the alkyl group; (4) benzyl (meth) acrylate and/or vinyl benzoate, and (5) a repeating unit that is obtained by reaction of the hydroxy group in the C_{2 -6} alkyl (meth)acrylate substituted with a hydroxy group at the terminal carbon atom of the alkyl group and/or a C2-6 alkyl vinyl ether substituted with a hydroxy group at the terminal carbon atom of the alkyl group, with a compound having both an isocyanate group capable of forming a O-CO-NH linkage by reaction with the hydroxy group and an ethylenically unsaturated group, preferably a (meth)acrylate group that is linked to the isocyanate group via a linker group, such as a C₂ - C₈ alkylene group. The relative amounts of these repeating units can be varied over a considerable range, but preferable adhesion and impact resistance are obtained if the combined amount of repeating units derived from (2), (3), and (4) is 40 mol% or higher, such as 50 mol% or higher, such as 60 mol% or higher, but 95 mol% or less, such as 90 mol% or less, e.g. 85 mol% or less or 80 mol% or less, relative to all repeating units of the copolymer (A). The crosslinking density and thereby hardness can be increased by a larger amount of (3) and (5), which is preferably 5 mol% or more, such as 8 mol% or more or 10 mol% or more. The amount of repeating units (1) derived from TFE and/or HFP influences the resistivity and staining resistance of the coating, and the relative amount is preferably 10 mol% or more, such as 15 mol% or more, 20 mol% or more or 25 mol% or more, but preferably 70 mol% or less, such as 60 mol% or less.

The (meth)acrylic fluoropolymer (A) can be prepared by methods known in the art, but can also be obtained from commercial suppliers.

The amount of the (meth)acrylated fluoropolymer (A) in the UV-crosslinkable composition is not particularly limited, but often 5% by weight or more may be required to exert the desired function, relative to the total weight of the UV-crosslinkable composition. On the other hand, if the amount of the (meth)acrylated fluoropolymer (A) is too high, the degree of crosslinking upon UV exposure or the viscosity during coating may be impaired. For these reasons, the amount of the (meth)acrylated fluoropolymer (A) is preferably in the range from 5 to 75 % by weight, more preferably 10 to 60 % by weight, such as 10 to 50% by weight or 10 to 45 % by weight, relative to the total weight of the UV crosslinkable composition.

### (B) The (meth)acrylic monomer or oligomer

The (meth)acrylic monomer or oligomer is an essential part of the UV-crosslinkable composition, as it facilitates the formation of a crosslinked structure by reaction with the (meth)acrylated fluoropolymer (A) and acts as a reactive diluent for the (meth)acrylated fluoropolymer (A), thereby ensuring that a coatable UV-crosslinkable composition having good handleability and suitable viscosity for the coating operation can be obtained, thereby avoiding the need for a solvent. The degree of crosslinking of the finally obtained coating can be adjusted by the amount of (meth)acrylic monomer or oligomer and the number of radical-reactive, ethylenically unsaturated groups.

The (meth)acrylic monomer or oligomer is not particularly limited and can be selected in consideration of the desired viscosity, surface tension, cross-linking density, compatibility with other components and reactivity. In particular, it is preferable to select the (meth)acrylic monomer or oligomer compounds from those that have a surface tension at 25°C of 40 dyne/cm or less, preferably 35 dyne/cm or less, 32 dyne/cm or 30 dyne/cm or less, 28 dyne or less, or 27 dyne or less (where 1 dyne/cm = 1 mN/m), and/or a dynamic viscosity of 20 cps (at 25°C) or less, preferably 15 cps (at 25°C) or less. The respective properties are typically indicated by the suppliers of the monomers but can also be determined by methods usual in the art, such as ASTM D445-23 (viscosity) and ASTM D1331-20 (surface tension). These properties can often be found in (meth)acrylic monomers that include a (typically one) 5-7 membered ring structure, such as an aromatic or aliphatic 5 to 7 membered ring structure formed by carbon atoms and optionally one or two oxygen atoms, or a long chain (i.e. C8 or higher) alkyl chain. Thus, in one embodiment, the (meth)acrylic monomer or oligomer is selected from compounds that have a 5 to 7 membered cyclic structure, such as a cyclohexane group, a cycloheptane group, a benzyl group, a tetrahydrofurfuryl group, or a dioxane group, or a C_{8 -24} alkyl group, and one or more (meth)acrylic groups, preferably acrylic groups, and these monomers preferably have a surface tension and/or viscosity as described above, including the preferred embodiments. Here, the 5-7 membered cyclic structure, such as the cyclohexane group, cycloheptane group or benzyl group, may be substituted by one, two or three hydrocarbon groups, in particular one to three linear or branched C_{1 -6} alkyl groups. Specific examples include tetrahydrofurfuryl acrylate, 5-Ethyl-1,3-dioxan-5-yl)methyl acrylate, 4-tert-butyl cyclohexyl acrylate, dodecyl acrylate, 3,3,5-Trimethylcyclohexyl Acrylate, isobornyl acrylate, and phenoxyethyl acrylate. Such monomers can be used as sole compound in the class of (meth)acrylic monomer or oligomer, but are often used in combination with other (meth)acrylic monomers or oligomers. In this case, the relative amount of the monomer or oligomer having a surface tension of 40 dyne/cm or less, preferably 35 dyne/cm or less, or 30 dyne/cm or less, and/or a viscosity of 20 cps (at 25°C) or less, preferably 15 cps (at 25°C) or less is preferably such that the surface tension of the combination of all (meth)acrylic monomers or oligomers is 50 dyne/cm or less, preferably 40 dyne/cm or less, or 35 dyne/cm or less, and/or the viscosity of all (meth)acrylic monomers or oligomers is 30 cps (at 25°C) or less, preferably 25 cps (at 25°C) or less, more preferably 20 cps or less.

General examples of other (meth)acrylic monomer or oligomer include (meth)acrylic monomers such as acrylic acid, methacrylic acid, methyl (meth)acrylate, ethyl (meth)acrylate, n-propyl (meth)acrylate, isopropyl (meth)acrylate, n-butyl (meth)acrylate, isobutyl (meth)acrylate, sec-butyl (meth)acrylate, t-butyl (meth)acrylate, n-pentyl (meth)acrylate, 3-methyl butyl (meth)acrylate, n-hexyl (meth)acrylate, 2-ethyl-n-hexyl (meth)acrylate, n-octyl (meth)acrylate, cyclohexyl (meth)acrylate, isobornyl (meth)acrylate, benzyl (meth)acrylate, 2-hydroxyethyl (meth)acrylate, 2-hydroxypropyl (meth)acrylate, 3-hydroxypropyl (meth)acrylate, 4-hydroxybutyl (meth)acrylate, 5-hydroxypentyl (meth)acrylate, 6-hydroxyhexyl (meth)acrylate, 4-hydroxy-cyclohexyl (meth)acrylate, phenoxyethyl (meth)acrylate, stearyl (meth)acrylate, lauryl (meth)acrylate, 2-ethylhexyl (meth)acrylate, allyl (meth)acrylate, ethoxyethyl (meth)acrylate, methoxyethyl (meth)acrylate, glycidyl (meth)acrylate, tetrahydrofurfuryl (meth)acrylate, neopentyl glycol mono(meth)acrylate, neopentyl glycol di(meth)acrylate, (5-Ethyl-1,3-dioxan-5-yl)methyl acrylate, N,N-dimethylaminoethyl (meth)acrylate, N,N-diethylaminoethyl acrylate, (1,1-dimethyl-3-oxobutyl)(meth)acrylate, 2-acetoacetoxyethyl (meth)acrylate, 2-methoxyethyl (meth)acrylate, 2-ethoxyethyl (meth)acrylate, cyclohexyl (meth)acrylate, 4-(1,1-dimethylethyl)cyclohexyl (meth)acrylate, neopentyl glycol mono (meth)acrylate, and glycerol mono (meth)acrylate, and oligomers thereof.

Other examples include compounds represented by the formula CH₂=CH-C(O)O-R¹ or CH(CH₃)=CH-C(O)-R¹, preferably CH₂=CH-C(O)O-R¹, wherein R¹ is hydrogen, an optionally substituted alkyl group having 1 to 16, preferably 2 to 12 and more preferably 3 to 10 carbon atoms, or an optionally substituted benzyl group, wherein the optional substituent is selected from OH, OR^{a} (where R^{a} is a C1-8 alkyl group, or a 5-7 membered aliphatic or aromatic ring group such as a benzyl group or a pyridinyl group, each of which may optionally be substituted by OH, CN, NCO, halogen and NO₂), SH, CN, NH₂, NHR², NR²R³ (wherein R² and R³ are independently selected from alkyl groups having 1 to 6 carbon atoms that may optionally be substituted by one or two hydroxyl groups), SCN, NCO, and halogen (F, Cl, Br, or I) atoms, and wherein the optional substituent is preferably a hydroxyl group or NCO group, and oligomers thereof. In principle, any (meth)acrylate-group containing monomer discussed above for the repeating units of the (meth)acrylic fluoropolymer (A) can be used as (meth)acrylic monomer or oligomer.

Further examples include multifunctional (meth)acrylates having 2, 3, or 4 (meth)acrylate groups. Such compounds may include those that are obtained by ester formation of (meth)acrylic acid with polyols, such as 1,6 hexanediol, pentaerythritol or trimethylol propane, e.g. trimethylolpropane triacrylate or tricyclo[5.2.1.0(2,6)]decandimethanol-diacrylat.

Such compounds may be represented by the following Formula A:

X-[O-C(O)-CR¹=CH₂]ₙ Formula A

where R¹ is H or CH₃, preferably H, n is an integer of 2, 3, 4 or higher, preferably 2, 3 or 4, most preferably 3 or 4, and X is an organic group having 1 to 40 carbon atoms, e.g. 4 to 20 carbon atoms, preferably an aliphatic group such as an alkylene group that may include a polyoxyethylene or polyoxypropylene chain, or an aromatic group as based e.g. on polyphenols.

The organic group represented by X is not particularly limited as long as it has the required valency for the n (meth)acrylate groups. X it the residue of a polyol having n hydroxy groups which is reacted with (meth)acrylic acid to form the compound of Formula A. X may derive from polyols such as trimethylolpropane or pentaerythritol.

In one embodiment, the compound of Formula A may be represented by the following Formula B:

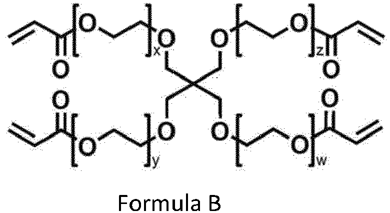

Here, w, x, y and z are each independently integers of 0 or greater, preferably 1, 2, 3 or 4, with w+x+y+z being from 0 to 20, preferably from 2 to 12, such as 4 to 10.

The (B) (meth)acrylic monomer or oligomer may consist of only one compound, but also more than one (e.g. 2, 3, 4 or 5) compounds may be used in combination. In one embodiment, the (meth)acrylic monomer or oligomer (B) comprises one and preferably both of a monofunctional acrylic monomer and a di- or higher functional acrylic monomer. Here, the di- or higher functional acrylic monomer may be selected from those described above, including those represented by Formula A or B.

The relative amount of (B) the (meth)acrylic monomer or oligomer in the UV-crosslinkable composition is not particularly limited and may be chosen in consideration of the desired crosslinking density, the viscosity of the resulting composition and the number of (meth)acrylate groups capable of crosslinking upon UV irradiation and initiation of the radical crosslinking reaction. In practice, an amount of 20 % by mass or more has been proven useful, and often 30 % by mass or more or 40 % by mass or more may be used, relative to the total weight of the UV-crosslinkable composition. On the other hand, in order to allow the other components to exert their function sufficiently, the amount of (B) the (meth)acrylic monomer or oligomer is typically 95% by weight or less, such as 90% by weight or less, relative to the total weight of the UV-crosslinkable composition. In certain embodiments, the amount of (B) the (meth)acrylic monomer or oligomer is from 40 to 90 % by mass, preferably 50 to 85% by mass by mass, relative to the total weight of the UV-crosslinkable composition.

Such amounts are useful in order to obtain a solvent-free coating composition that has a desirable viscosity for the coating operation and which nonetheless avoids the problems that can occur due to the use of a solvent, such as occurrence of cracks during drying or excessive volume reduction or porosity due to solvent evaporation, as the monomer or oligomer is incorporated into the crosslinked structure and remains as part of the coating. Such amounts of monomer or oligomer in combination with the avoidance of a use of a solvent also improve the hardness of the crosslinked coating and its break down voltage. While the reasons for this observations are not fully understood, it is contemplated that in the absence of solvent and subsequent evaporation a denser network is formed. Also, dielectric strength/break down voltage may be improved by the absence of voids or cracks that otherwise could form upon evaporation of a solvent.

### (C) The optional fluorine-free polymer

The UV-crosslinkable composition may optionally further contain a fluorine-free polymer. Such a component may however be used in order to provide certain properties to the composition, such as impact strength.

The type of fluorine-free polymer is not particularly limited and can be selected from a wide variety of homopolymers and copolymers. The repeating units of the fluorine-free polymer can be derived from any type of suitable monomers, including in particular (meth)acrylic monomers, and the monomers described above as comonomers of the (meth)acrylated fluoropolymer (A) can be used without limitation. In particular, the above description of the (meth)acrylated fluropolymer (A) may apply except that repeating units derived from fluorinated monomers are absent.

Examples of monomers that can be used to prepare homopolymers and copolymers suitable as fluorine-free polymer include acrylic acid, methacrylic acid, methyl (meth)acrylate, ethyl (meth)acrylate, n-propyl (meth)acrylate, isopropyl (meth)acrylate, n-butyl (meth)acrylate, isobutyl (meth)acrylate, sec-butyl (meth)acrylate, t-butyl (meth)acrylate, n-pentyl (meth)acrylate, 3-methyl butyl (meth)acrylate, n-hexyl (meth)acrylate, 2-ethyl-n-hexyl (meth)acrylate, n-octyl (meth)acrylate, cyclohexyl (meth)acrylate, isobornyl (meth)acrylate, benzyl (meth)acrylate, 2-hydroxyethyl (meth)acrylate, 2-hydroxypropyl (meth)acrylate, 3-hydroxypropyl (meth)acrylate, 4-hydroxybutyl (meth)acrylate, 5-hydroxypentyl (meth)acrylate, 6-hydroxyhexyl (meth)acrylate, 4-hydroxy-cyclohexyl (meth)acrylate, (5-Ethyl-1,3-dioxan-5-yl)methyl acrylate, phenoxyethyl (meth)acrylate, stearyl (meth)acrylate, lauryl (meth)acrylate, 2-ethylhexyl (meth)acrylate, allyl (meth)acrylate, ethoxyethyl (meth)acrylate, methoxyethyl (meth)acrylate, glycidyl (meth)acrylate, tetrahydrofurfuryl (meth)acrylate, neopentyl glycol mono(meth)acrylate, neopentyl glycol di(meth)acrylate, N,N-dimethylaminoethyl (meth)acrylate, N,N-diethylaminoethyl acrylate, (1,1-dimethyl-3-oxobutyl)(meth)acrylate, 2-acetoacetoxyethyl (meth)acrylate, 2-methoxyethyl (meth)acrylate, 2-ethoxyethyl (meth)acrylate, cyclohexyl (meth)acrylate, 4-(1,1-dimethylethyl)cyclohexyl (meth)acrylate, neopentyl glycol mono (meth)acrylate, and glycerol mono (meth)acrylate. Of these, acrylic acid, methacrylic acid, methyl (meth)acrylate, ethyl (meth)acrylate, n-propyl (meth)acrylate, isopropyl (meth)acrylate, n-butyl (meth)acrylate, isobutyl (meth)acrylate, sec-butyl (meth)acrylate, t-butyl (meth)acrylate, n-pentyl (meth)acrylate, 3-methyl butyl (meth)acrylate, n-hexyl (meth)acrylate, 2-ethyl-n-hexyl (meth)acrylate, n-octyl (meth)acrylate, cyclohexyl (meth)acrylate, isobornyl (meth)acrylate, benzyl (meth)acrylate are preferred, and acrylic acid, methacrylic acid, methyl (meth)acrylate, ethyl (meth)acrylate, n-propyl (meth)acrylate, isopropyl (meth)acrylate, n-butyl (meth)acrylate and benzyl (meth)acrylate are more preferred.

In order to allow strong incorporation into the crosslinked structure, the fluorine-free polymer may preferably have radically reactive functional groups, such as ethylenically unsaturated or (meth)acrylate groups, which can be introduced in the same manner as discussed above for the (meth)acrylated fluoropolymer, such as by incorporation of a repeating unit having a hydroxyl group in a side chain and subsequent reaction of the hydroxyl group with an isocyanate compound having an ethylenically unsaturated group, such as one or more (meth)acrylate groups.

The content of the optional fluorine-free (meth)acrylic polymer is not particularly limited, but is typically not more than 30% by weight in order to not affect the properties of the other components. The content may also be 25% by weight or less, 20% by weight or less, 15% by weight or less or 10 % by weight or less, relative to the total weight of the UV-crosslinkable composition. Of course, the fluorine-free (meth)acrylic polymer may also be absent.

### (D) The optional adhesion promoter

The adhesion promoter serves to ensure adhesion to the metal substrate, and is thus typically present. The present inventors have however also found that an adhesion promoter is not necessarily required for substrates that have been pre-treated properly, in particular by an appropriate roughening treatment, optionally in combination with a solvent rinsing to be described later. However, for metal substrate surfaces that have not been pre-treated in such a manner, an adhesion promoter may be beneficial for achieving high pull-off strength. The best results in terms of adhesion and pull-off strength can be obtained if the adhesion promoter is combined with a proper roughening treatment, and preferably also a solvent rinsing, prior to application of the UV cross linkable composition.

If present, the adhesion promoter can be used in an appropriate amount, and generally an amount of 10% by mass or less is sufficient, and often no increased adhesion is observed if the amount of the adhesion promoter exceeds 10% by mass. Depending on the desired degree of adhesion, the amount of the adhesion promoter can however also be 8% by mass or less, 6% by mass or less, 5% by mass or less or 4% by mass or less. While there is no limitation on the minimum amount in view of this component being optional, typically an amount of 0.1 % by mass or more or 0.5 % by mass or more is required in order to achieve a remarkable effect on adhesion.

It is noteworthy that in the present invention the adhesion promoter is part of the UV-cross linkable composition and is not used as a kind of primer for the metal substrate. Without wishing to be bound by theory, it is contemplated that the inclusion of the adhesion promoter in the UV-crosslinkable composition leads to a better incorporation within the cross-linked structure formed after UV irradiation, and that thus preferable results in terms of pull-off strength can be obtained. This not only leads to improved adhesion to the metal substrate at the interface, but also an improved anchorage of the adhesion promoter within the cross-linked structure (i.e. improved cohesion), thereby minimising the risk of structural failure at or close to the interface to the metal substrate.

The type of adhesion promoter is not particularly limited and may be chosen from a large variety of substances. Also, the chemical nature of the adhesion promoter may be selected in view of the material constituting the metal surface.

Compounds that have been proven useful in practice include silanes optionally having epoxy or (meth)acrylate functionalities; epoxy compounds; isocyanates, in particular diisocyanates and homopolymers thereof; thiols; and compounds having a group containing phosphor or sulfur and oxygen, such as a phosphate group, a phosphonate group, a sulfate group, a sulfonic acid group or sulfinic acid group. These compounds preferably also have a radical-reactive group (e.g. an ethylenically unsaturated group), as this allows a more robust incorporation of the adhesion promoter into the cross-linked structure and increases pull-off strength. Examples of such compounds include e.g. (meth)acrylates having a silane group, for example 3-(trimethoxysilyl)propyl methacrylate.

Preferably the adhesion promotor is a compound having a phosphate or phosphonate group, in particular where the metal substrate surface is formed by aluminium or stainless steel, in order to achieve high adhesion. Here, the phosphate group is defined as group of formula P(=O)OR₃, where R is in each case independently hydrogen or an organic group, provided that not all R are at the same time hydrogen. Of the compounds having a phosphate group, it is more preferable to select from the group consisting of compounds having a phosphate group and an ethylenically unsaturated group, more preferably a (meth)acrylic group. Here, the number of ethylenically unsaturated group, more preferably (meth)acrylic groups, is preferably 2, 3 or 4, this allows a more robust incorporation of the adhesion promoter into the cross-linked structure and increases pull-off strength. These include e.g. compounds of the following formulae A and B:

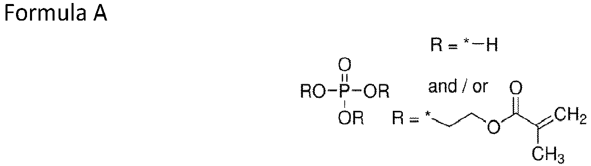

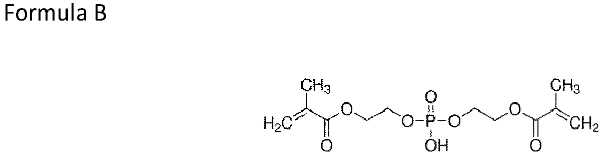

Thus, in a preferred aspect, the adhesion promoter at present in an amount of 0.5 - 10 % by mass relative to the total weight of the UV-crosslinkable composition and is selected from compounds having a phosphate group or phosphonic acid group (preferably a phosphate group) and 2, 3, or 4 (meth)acrylic groups in one molecule. In this preferred aspect, the metal substrate is preferably made from stainless steel or aluminium, more preferably aluminium. In order to achieve the best results in terms of pull-off strength, a composition satisfying these requirements is provided an aluminium or stainless steel surface that has been treated an appropriate roughening treatment and optionally a solvent rinse, as will be described below.

### Group capable of being decomposed upon exposure to UV radiation to from radicals or (E) compound capable of being decomposed upon exposure to UV radiation to from radicals

In order to render the composition crosslinkable upon exposure to UV radiation, it is necessary that a compound or group is present which, in reaction to the UV irradiation, decomposes to form radicals.

If a separate compound (E) is used, any known UV initiator can be used. Examples thereof include acetophenone compounds such as acetophenone, chloroacetophenone, diethoxyacetophenone, hydroxyacetophenone and 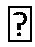 -aminoacetophenone; benzoin compounds such as benzoin, benzoin methyl ether, benzoin ethyl ether, benzoin isopropyl ether, benzoin isobutyl ether and benzyl dimethyl ketal; benzophenone compounds such as benzophenone, benzoylbenzoic acid, methylo-benzoylbenzoate, 4-phenyl benzophenone, hydroxybenzophenone, hydroxy-propylbenzophenone, acrylated benzophenone and Michler's ketone; thioxanthones such as thioxanthone, chlorothioxanthone, methylthioxanthone, diethylthioxanthone and dimethylthioxanthone; and other compounds such as benzyl, α-acyloxime ester, acylphosphine oxide, glyoxyester, 3-ketocoumaran, 2-ethylanthraquinone, camphorquinone and anthraquinone. Many of such initiators are commercially available, e.g. the products of the IRGACURE^{™} or OMNIRAD series, such as OMNIRAD 1173 (2-Hydroxy-2-methyl-1-phenylpropanon). Also, initiators of Type I and II can be used.

Also, as case demands, any of known auxiliaries for photo-initiation such as amines, sulfones and sulfines may be added. Suitable initiators and auxiliaries are well known to the skilled person and are commercially available.

Alternatively, it is possible to include a group that decomposes upon UV radiation in order to form radicals as part of one of the components (A), (B) and/or (C) by using a copolymerizable UV initiator in the synthesis of the components.

Such a copolymerizable UV initiator may be selected from the group consisting of benzophenon(meth)acrylate, benzoin(meth)acrylate and compounds represented by formula (VI) below: 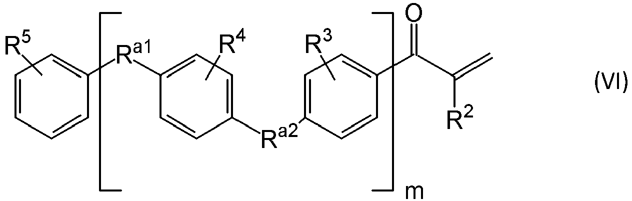 wherein R² represents a hydrogen atom or a methyl group, preferably a methyl group, R^{a1} and R^{a2}, which may be the same or different, each represents a carbonyl group - C(O)- or an ether linkage -O-; m represents an integer from 1 to 5, preferably an integer of 1 or 2, further preferably 1; R³, R⁴ and R⁵, which may be the same or different, each represent one or two optional substituents, which are preferably selected from C₁₋₆ alkyl groups, halogen (iodo, chloro, bromo or fluoro), amino groups, nitro groups, nitrile groups, and hydroxyl groups, or which may be absent (R³, R⁴ and R⁵ are all hydrogen), and if m is an integer of 2 or greater, the m R^{a1}, R^{a2}, R³ and R⁴ may respectively be the same or different.

There is no particular limitation in respect of the UV light for which the initiator is sensitive and which is capable of decomposing the initiator to form radicals to thereby initiate cross-linking, and any initiator can be used that is capable of generating radicals upon UV irradiation having e.g. a wavelength in the range of 100 - 400 nm. This can be performed by employing e.g. a mercury lamp having a relatively broad emission spectrum. However, in order to reduce energy costs and to avoid unwanted decomposition of other components it may be preferable to use in initiator that is sensitive towards relatively low-energy UV light that can be emitted from LEDs. Currently available UV-LEDs emit quasi monochromatic radiation, i.e. only emit at one wavelength, such as 365 nm, 385 nm, or 395 nm. Accordingly, the use of an initiator that is capable of generating radicals upon irradiation with light of a wavelength of 360 nm or higher, such as 365 nm or higher and 400 nm or less, forms an aspect of the present invention. Such materials are known to a skilled person and are commercially available, e.g. IRGACURE 2959 (1-[4-(2-Hydroxyethoxy)-phenyl]-2-hydroxy-2-methyl-1-propane-1-one).

### (F) Optional further components

The UV-crosslinkable composition may consist of the components (A), (B), (C), optionally (D) and (E) and may not include other components or a solvent. If, however, a solvent is to be used to facilitate the reaction and/or coating process, the solvent content is preferably less than 50% by weight or less, preferably 25% by weight or less, such as 20% by weight or less or 15% by weight or less. The solvent is not particularly limited, but is preferably aprotic. Suitable solvents include e.g. benzene, toluene, ketones, aliphatic hydrocarbons such as cyclohexane, esters such as methyl ethyl ketone or cyclohexanone, ethers such as tetrahydrofuran, and other solvents such as N-methyl pyrrolidone (NMP).

Even though other agents are in principle not necessary and are preferably absent or limited to e.g. 20% by weight or less, such as 10% by weight or 5% by weight or less as they may possibly affect adhesion and/or dielectric strength, the use of particulate or fibrous reinforcing fillers (e.g. glass fibers), colouring agents such as pigments and dyes, rheology modifiers and other additives known in the art is within the scope of the present invention.

### Composite material (coated metal substrate)

The use of the UV-crosslinkable composition as described above allows obtaining a composite material having a cross-linked coating on a metal substrate. Due to the unique combination of components, the coating may exhibit very high adhesion in a pull-off test of up to SMPa or higher, such as from 5 - 10 MPa or 5 to 9.5 MPa, and also allows obtaining a coating having the ability to withstand severe electric fields, as expressed by a dielectric strength (at a thickness of 30 µm, also denoted as breakdown voltage) of 3.0 kV or greater, such as from 3.5 to 10.0 kV, from 3.5 to 7.5 kV, or from 3.5 to 5.0 kV.

The composite material of the present invention is obtainable by disposing the UV-crosslinkable composition on a metal substrate and initiating crosslinking by UV irradiation. In view of the high pull-off strength and dielectric strength/high break down voltage the composite material is well suited for use as casing material for electric applications, such as battery casing of e.g. electric vehicles (including battery-electric and hybrid vehicles), but also for casings of other high-voltage applications.

In addition, due to the ability to reduce or exclude the use of solvent, a high-quality and tough coating having no or few defects can be formed, which can withstand severe weathering conditions. By further allowing for UV (but not thermal) cross-linking it is possible to avoid a heating step relying on temperatures of 45°C or higher, so that the coating can be formed even on casings/housings of electronic or electrical devices that are heat-sensitive, such as lithium ion secondary batteries. Specifically, the coating can be formed as a protective coating after assembly of the electronic or electrical device (battery).

The coating of the present invention allows obtaining an excellent balance between chemical resistance, heat resistance, adhesion, cohesion, and high breakdown voltage even at relatively low thicknesses. In particular, the coating of the present invention provides these properties, such as a breakdown voltage of 3.0 kV or higher already at a low coating thickness (thickness of the cured composition) of 100 µm or less, such as 90 µm or less, 80 µm or less, 70 µm or less, 60 µm or less, or 50 µm or less, such as 40 µm or less or 30 µm or less, but preferably 5 µm or more, such as 10 µm or more or 15 µm or more. This low thickness allows not only savings in material costs, but also facilitates a lower thickness of casings of batteries and battery cells, thereby potentially allowing to increase battery capacity (energy density) in applications where space requirements are of concern, such as many types of battery-electric and hybrid vehicles.

In addition to pull-off strength and high breakdown voltage, the coatings of the present invention may also allow achieving a combination of high adhesion and cohesion, as reflected by a classification of Class 0 (5B) or 1 (4B), preferably 0 (5B), in a cross-cut test according to ISO-2409 after crosslinking and also after 1 h in boiling water (100 °C).

In summary, a durable and strongly adhering protective coating with no or few defects can be formed that is capable of withstanding severe external influences and strong electric fields without the need for elevated temperatures that may be detrimental to electric and electronic devices.

### Method for producing the composite material (coated metal substrate)

In another aspect, the present invention provides a method for producing the composite article (coated metal substrate) utilising the UV-cross linkable composition as described above. The method comprises the steps:
i. optionally, roughening the surface of the metal substrate, preferably by laser treatment;
ii. applying the UV-crosslinkable composition for forming a crosslinked coating as described above on the metal substrate; and
iii. irradiating the UV-crosslinkable composition with UV radiation.

Optionally, the method may further comprise, before applying the UV-crosslinkable composition, a step of rinsing the surface of the metal substrate with an aprotic or protic solvent other than water; and optionally a step of performing a plasma treatment after the rinsing with an aprotic or protic solvent other than water.

### Optional roughening treatment

Performing the optional roughening treatment can lead to an improved adhesion to the metal substrate. While roughening treatments are per se known in the art in order to improve adhesion, the present inventors have found that a surprisingly already a relatively small degree of roughening is sufficient in order to achieve high adhesion values. Such a small degree of roughening is expressed in the present invention as a roughening treatment that leads to the following surface parameter values:
Ra: 0.10µm or greater, such as 0.10 µm - 1.00 µm, preferably 0. 12 µm or greater, such as 0.12µm-0.60 µm, more preferably 0.15 µm or greater, such as 0.15 µm to 0.40 µm, and most preferably 0.18 µm or greater, such as 0.18 µm - 0.35 µm; and
Rz: 0.50 µm or greater, such as 0.50 - 4.00 µm, preferably 1.00 µm or greater, such as 1.00 µm to 3.50 µm, more preferably 1.75 µm or greater, such as 1.75 µm to 3.25 µm, and most preferably 2.10 µm or greater, such as 2.10 µm to 3.00 µm.

In the present invention, the surface roughness values Ra and Rz can be determined by any method usual in the art, and specifically the respective Ra and Rz values may be determined in accordance with DIN EN ISO 1302.

Further, while the method for performing the roughening treatment is not particularly limited, preferably the roughening is effected by a laser roughening method. Here, the type of equipment and the roughening conditions suitable for achieving a certain Ra or Rz value can be selected by a skilled person based on common knowledge and/or the manufacturer's instructions, typically employing diode lasers (DL) or Nd:YAG lasers. Manufacturers of laser roughening equipment include Pulsar Photonics, Gehring and AdaptLaser. As there is ample literature about the techniques for laser roughening, a more detailed description is omitted. Suitable conditions may include a peak emission wavelength of 900 to 1,200 nm, a pulse frequency of 100 - 1000 kHz, a peak power of 100 - 1,000 kW, and an energy per pulse of 100 - 300 µL (at a beam diameter of 3 mm).

### Optional step of rinsing the metal substrate surface with a protic or aprotic solvent (except water)

Many metal surfaces, such as in particular aluminium metal surfaces, are covered by water or other organic contaminants adhering to the metal surface when left in a normal (air) environment. Without wishing to be bound by theory, it is believed that such contaminants/water may affect the metal/coating interaction, ultimately lowering adhesive strength. While this effect can partially be countered by using an adhesion promoter as outlined above (in particular by using an adhesion promoter that reacts with the surface hydroxyl groups or physisorbed water, such as silanes), better adhesion values in a pull-off test can generally be achieved if, after the roughening and prior to the application of the UV crosslinkable composition, the metal substrate surface is cleaned by rinsing with a solvent other than water.

The solvent can be protic or aprotic. Examples of protic solvents include alcohols, such as methanol, ethanol, isopropanol and butanol. Examples of aprotic solvents include aliphatic and aromatic hydrocarbons, such as hexane, cyclohexane, benzene and toluene, ketones, such as acetone, cyclohexanone, dimethyl ketone, diethyl ketone, methyl ethyl ketone, ethers, such as methyl ethyl ether, diethylether, tetrahydrofuran, and nitriles, such as acetonitrile, as well as amides such as dimethyl formamide (DMF), sulfoxides such as dimethyl sulfoxide (DMSO), and chlorinated hydrocarbons, such as dichloromethane (DCM), trichloromethane, and tetrachlorocarbon. Preferably, the solvent has a boiling point (at 1 atm) of 125°C or less, 100°C or less, or 80°C or less in order to allow for rapid evaporation after the rinsing process, but is generally 20°C or higher in order to avoid a large solvent loss by evaporation. It is possible to re-use the solvent for several rinsing operations, optionally with steps for purification such as distillation during between one or more rinsing operations .

It has been found that better adhesion-improving properties can be obtained with aprotic solvents. While the reason is not fully understood and without wishing to be bound by theory, protic solvents may due to their acidic hydrogen atom affect the polymerization/crosslinking reaction and/or may adhere more to the metal surface via hydrogen bonding. In consequence, a rinsing with an aprotic solvent may thus improve adhesive strength.. Accordingly, the process of the present invention preferably makes use of an aprotic solvent in the rinsing step.

The protic or aprotic solvent does not include water for the reasons outlined above. Also, the protic or aprotic solvent is preferably anhydrous (i.e. free of water). If water is contained, the water content in the protic or aprotic solvent is preferably low, such as 1,000 ppm or less, e.g. 500 ppm or 300 ppm or less, preferably 100 ppm or less, such as 50 ppm or less, relative to the total weight of the solvent.

The rinsing is preferably conducted for a duration and at a temperature that allows removing all or the majority of adhering substances or contaminants from the metal substrate surface. While there are no specific limitations in this regard, the rinsing is preferably conducted for at least 0.1 s, such as for at least 1, at least 5 s or at least 10 s. The rinsing may also be effected by immersing the metal substrate in the protic or aprotic solvent.

### Optional step of plasma treatment

In a similar manner as for the solvent rinsing step, also a plasma treatment can be performed in order to remove contaminants from the metal substrate surface. Thereby, adhesion of the cross-linked coating can be improved.

The conditions for the plasma treatment are not specifically limited, and a conventional method for plasma cleaning of metal surfaces can be used.

The plasma treatment can be carried out in any atmosphere, including nitrogen (N₂), argon or air. The exposure time can be from 1 to 600 seconds, preferably from 30 to 300 seconds, and the discharge power can be from 50 to 500 W.

The method of the present invention can include at least one of a solvent rinsing step and a plasma treatment step. It is however preferable to combine both the solvent rinse and plasma treatment, and in this case the plasma treatment is performed after the solvent rinse. Combining the solvent rinse and plasma steps not only improves initial adhesion, but in particular long-term adhesion, as will be demonstrated in the following Examples.

### EXAMPLES

In the following examples, a UV crosslinkable composition was prepared according to the following general preparation method:
1) A fluoropolymer precursor material having a reactive group (a) capable of forming a linking group with a (meth)acrylic compound having a group reactive with the group (a) is reacted in a suitable solvent (e.g. butyl acetate) at temperature in the range from room temperature to 100°C with a (meth)acrylic compound having group reactive with the group (a) to form a (meth)acrylated fluoropolymer (A). Here, the group (a) may be a hydroxyl group, and the group reactive with the group (a) may be an isocyanate group.
   Here, the degree of acrylation can be adjusted by the relative amount of the (meth)acrylic compound having a group reactive with the group (a) in respect of the number of groups (a) in the precursor material (e.g. the hydroxyl group value as determined by KOH titration). The reaction is optionally yet preferably conducted in the presence of a suitable catalyst, such as complexes of Lewis acidic metals such as Sn, Zr or Ti, in a suitable amount, such as 0.01- 0.1 wt.%., relative to the amount of fluoropolymer precursor The reaction mixture may be stirred (e.g. for 10 - 15 minutes) at room temperature, and then be warmed to e.g. 50 - 80°C to complete the reaction, and the completion of the reaction can be confirmed e.g. by IR spectroscopy (for example by confirming the disappearance of the NCO signal at 2270 cm⁻¹ in case of a (meth)acrylic compound having a NCO group as group reactive with the group (a)). If the reaction is not complete, the reaction mixture may be stirred for additional time, e.g. at RT for up to 8 hours.
   Before further use, the product may be filtered off to remove soluble byproducts. By these steps the (meth)acrylated fluropolymer (A) is obtained.
2) Following the preparation of the (meth)acrylated fluropolymer (A), it is combined with the (meth)acrylic monomer(s) or oligomer and a UV initiator, optionally in a suitable solvent, in which case the solvent is subsequently removed under reduced pressure, optionally at elevated temperature. In order to avoid reaction or premature crosslinking, the solvent is preferably not used or only used in small amounts, and the solvent is removed at 50 °C or less for less than 1 hour. In order to minimize side reaction, the solvent removal may be monitored by weight loss or GC measurement.
3) If further components are to be included, such as a fluorine-free (meth)acrylic polymer and/or an adhesion promoter, these can be added subsequently, but are preferably added in the above step 2 together with the (meth)acrylic monomer(s) or oligomer, optionally in a suitable solvent, followed by solvent removal as set out above.
   Depending on the amount and type of the (meth)acrylic monomer(s) or oligomer(s), the resulting composition is solvent-free, yet still has a suitable viscosity for providing a coating layer by a liquid operation. Also, by choice of the (meth)acrylic monomer(s) or oligomer(s) a suitably low surface tension is achieved that allows avoiding the formation of bubbles or recesses, and which is intimate contact even with a roughened surface, thereby maximizing adhesion.

The compositions tested were all based on a (meth)acylated fluoropolymer (A) precursor, prepared as described for Polymer (a) described in paragraph [0101] of EP 2 108 667 A1, having a monomer composition of tetrafluoroethylene/vinyl versatate/hydroxybutyl vinyl ether = 45/39/16, number average molecular weight (Mn) = 1.2 x 10³, Tg = 35°C, fluorine content (mass %) = 24, hydroxyl value (mgKOH/g) = 54. For preparing the (meth)acrylated fluoropolymer (A), the pending OH groups (OH value: about 60 mg KOH/g polymer) of the precursor were reacted in n-butyl acetate in the presence of a suitable catalyst with various amounts of 2-isocyanatoethyl acrylate at 45 °C for to provide the desired degree of (meth)acrylation (from 50 to 90 mol%, relative to all hydroxy groups in the non-(meth)acrylated fluoropolymer precursor), thereby providing an acrylated fluoropolymer (A) which in the following referred to as "Acrylated Fluoropolymer 1".

The test composition were formulated with the Acrylated Fluoropolymer 1 described above, a UV initiator (e.g. 2-hydroxy-2-methyl-1-phenylpropanone, "Omnirad 1173"^{™} or a similar compound), where indicated a solvent, and where indicated a (meth)acrylic monomer.

With the aim of developing a composite material/coated sheet based on a UV curable compositions that has the required properties in use (i.e. wherein the coating is durable and tough, and which has a permanent pull-off strength of 5 MPa or greater and a dielectric strength of 3.0 kV or greater, preferably 3.5 kV or greater (at a coating thickness of 30µm) in the tests described below, a large number of compositions were tested on aluminium sheets that had undergone a solvent rinse with isopropanol or methyl ethyl ketone.

Specifically, after coating the respective UV-curable composition on a solvent-rinsed aluminium sheet and curing with UV light, in a first evaluation, the following preliminary tests were conducted with the resulting composite:
- a cross-cut test was performed in accordance with ISO 2409, wherein the UV-cured coating was cut lattice-wise and then it was determined whether the cuts are smooth and whether any of squares of the lattice fall off or are detached; the test was considered passed only if the edges of the cuts are completely smooth and none of the squares of the lattice is detached (Classification 0 (5B) of ISO 2409);
- a boiling water test was performed by immersing the composite in boiling water for 1 hour, and the state of the coating after the boiling water test was visually evaluated as to visually conceivable defects; the test was considered passed only if no defects were visible and if the cross-cut test had also been passed (Classification 0 (5B) of ISO 2409);

- a thermal cycling test was conducted for 168 cycles, one cycle being defined as follows:
   1. heating to 80°C and 80% relative humidity over 60 minutes;
   2. holding 80°C and 80% relative humidity for 60 minutes;
   3. cooling to -40°C over 120 minutes with regulation of relative humidity to 30% at 0°C, no control of relative humidity below 0°C;
   4. holding -40°C for 240 minutes;
   5. heating to 23°C over 60 minutes, with regulation of relative humidity to 30% at 0°C.
   Following these 168 cycles, the coating was evaluated as to possible defects such as delamination, cracks, bubble formation, decomposition or discoloration, and the test was considered passed only if no defects were visually conceivable and if the cross-cut test had also been passed.

Only composites that passed these preliminary tests were taken to further tests, as otherwise the physical properties would not match the requirements in use. The compositions that passed these tests were than evaluated with respect to breakdown voltage and pull-off adhesion according to the following test protocols. Here, the aim was to identify compositions that have high pull-off adhesion (5 MPa or greater) and high breakdown voltage (3 kV or higher at a coating thickness of 30µm) in order to satisfy the requirements in use.
a. Pull-Off Adhesion Test: The test is conducted in accordance with ASTM D4541 using a suitable instrument, such as PosiTest^{™} AT-A or AT-M Pull-Off Adhesion Tester (according to the Quick Guide v. 5.3 of the manufacture DeFelsKo).
b. Breakdown Voltage: Determined in accordance with ASTM D149-97A, Method A, at a maximum current of 40mA, a test time after achieving the highest voltage of 2 seconds, a ramp time of 20s from 0 to the highest voltage, and a highest voltage of 10 kV; here the ramp rate is 500 V/s. The test is conducted until breakdown occurs; if no breakdown occurs the highest voltage of 10 kV is held for 2 seconds and the test is terminated.

The first tests were conducted with compositions comprising only the obtained Acrylated Fluoropolymer 1, a difunctional (meth)acrylic monomer (1,6 hexane diol diacrylate, HDDA, surface tension: 33.2 dyne/cm and viscosity: 7 centipoise), a solvent (MEK), and a photoinitiator. Here, the degree of acrylation and the amount of UV-initiator was varied. The compositions are illustrated below:

**Table 1: First Tests (Comparative)**

| | Compound | Amount |
|---|---|---|
| Comparative Example 1 | Acrylated Fluoropolymer 1 (degree of acrylation: 50, 70 or 90 mol%), solution in n-butyl acetate, solid content: 80 wt.% | 4g |
| | 1,6-Hexanediol diacrylate | 0, 20 or 40% by mass |
| | MEK (Solvent) | 1g |
| | Photoinitiator | 0.05g, 0.13g or 0.26 g |

Each of the three grades of Acrylated Fluoropolymer 1 with the respective degrees of acrylation were tested with different amounts of Photoinitiator. The respective compositions (9 in total) applied on the Al substrate, the solvent evaporated and then UV-crosslinked (at 2,500 mJ/cm²).

The resulting composite materials (coated sheets) had a good appearance and passed the cross-cut test. However, they failed the boiling water test, showing failures such as delamination and cracks. While the reason for this is not fully clear, it is assumed that this may be caused by voids formed during solvent removal and possibly impairment of metal-coating interaction due to solvent effects, thereby lowering adhesion and giving rise to structure imperfections that allow water ingress. Nonetheless, pull-off adhesion tests were conducted on several materials and resulted in pull-off adhesion in the order of 0.4 - 0.6 MPa.

Subsequently, attempts to eliminate the solvent were made in order to avoid the formation of these effects. Here, the solvent was eliminated. HDDA has a surface tension of 33.2 dyne/cm and a viscosity of 7 centipoise. In some experiments, this was combined with a silane coupling agent. The obtained coatings were however brittle and did not pass the boiling test and the cross-cut test, flaking off after cutting.

Further attempts to improve the properties of the obtained coatings include variations of the (meth)acrylation agent, using diisocyantates such as IPDI instead of isocyanate (meth)acrylates for the modification of the fluoropolymer (A) precursor (the material prior to (meth)acrylation). It was assumed that these materials could result in better crosslinking, as then two chains of the fluoropolymer precursor polymer could be linked. However, no improvement could be observed, and instead inferior results were obtained, probably due to missing cross-links between the urethane network obtained from the fluoropolymer precursor/IPDI combination and the (meth)acrylate network formed from the (meth)acrylic monomer.

As these tests did not provide the desired results, focus was directed towards the relative amounts of the components. Surprisingly, the best results were obtained with solvent-free compositions that contain relatively large amounts of (meth)acrylic monomer, i.e. 40 - 90, preferably 50 - 85 wt.% of the total composition, the remainder being formed from the (meth)acrylated fluoropolymer (A) and optionally a fluorine-free (meth)acrylic polymer in amounts up to 30 wt.% of the total of the composition.

Such optimized compositions showed good results in cross-cut and boiling water tests, and were generally capable of achieving relatively high pull-off adhesion tests in the order of 2 -3 MPa and the desired break-down voltage. These results were however still not considered sufficient for practical application.

Since optimization of coating composition did not lead to the desired results, attempts were made to the surface preparation. For these tests the composite materials (coated sheets) were prepared using a rinsing with either MEK (methyl ethyl ketone) or IPA (isopropanol) on the aluminum sheet. The surface was then also tested with and without ("smooth") laser roughening, and with and without plasma treatment. Also, compositions with and without adhesion promoter (in this case a phosphorous based substance according to Formula A above) were tested. The following results (expressed in MPa) were obtained in a pull-off adhesion test:

**Table 2: Adhesion Test Results (in MPa)**

| | IPA Rinse | MEK Rinse | Plasma only | IPA+Plasma | MEK+Plasma |
|---|---|---|---|---|---|
| Laser^{a,c} | 5.1 | 7.0 | 8.8 | 8.1 | 9.3 |
| Laser^{b,c} | 8.2 | 9.2 | 6.9 | 7.0 | 8.2 |
| Smooth^{a,c} | 3.3 | 2.3 | 3.4 | 3.9 | 2.6 |
| Smooth^{b,c} | 2.7 | 6.8 | 5.0 | - | 3.6 |
| Laser^{a,d} | 4.2 | 6.5 | 8.6 | 5.9 | 8.5 |
| Laser^{b,d} | 4.7 | 8.9 | 6.9 | 9.0 | 9.4 |
| Smooth^{a,d} | 2.6 | 2.4 | 3.9 | 2.7 | 3.4 |
| Smooth^{b,d} | - | 3.7 | 5.2 | 2.8 | 4.3 |

| | | | | | |
|---|---|---|---|---|---|
| ^{a} 48h after coating ^{b} 15 - 20 days after coating ^{c}1 % adhesion promoter ^{d} No adhesion promoter - Not determined | | | | | |

The following conclusions can be drawn from the date in Table 2:
1. The laser roughening treatment leads to a significant improvement in pull-off adhesion. A comparison of experiments with and without layer roughening shows that the roughening treatment leads to an improvement of 4 - 7 MPa.
2. Different pre-treatment conditions (solvent-plasma combinations) can have an effect of up to 4 MPa for roughened substrates, while for smooth substrates the maximum effect is max. 1 MPa. In general, the use of protic solvents (IPA) impair the adhesion on smooth surfaces, while aprotic solvents and surface activation (Plasma) improve the adhesion on both smooth and roughened surfaces.
3. Further, the adhesion promoter allows obtaining an increase in adhesion of up to 1 MPa for surfaces that have not properly been pre-treated. For rough surfaces that have been solvent-rinsed using MEK and which have undergone plasma treatment, the effect of the adhesion promoter is seen shortly after coating and long-term adhesion is still very high at 9.3 MPa, but long-term adhesion is improved if no adhesion promoter is used (9.4 MPa vs 8.2 MPa). These results suggest that a proper surface treatment (roughening and rinsing) may render the use of an adhesion promoter unnecessary, which otherwise might interfere with the other components of the coating, potentially causing cohesive (or chip-off) rather than adhesive failure of the coating.
Similarly, while plasma treatment leads to improved short-term adhesion after 48 h, it is noteworthy that long term adhesion after 15-20 days is lower than the initial value. Conversely, there is an increase in adhesion strength for those samples that have not undergone plasma treatment, but only solvent rinse. In these cases, the addition of adhesion promoter may be beneficial to increase short-term adhesion.

Thus, the following combinations have been proven to lead to desirable properties on roughened surface:
a. The combination of aprotic solvent rinse and plasma treatment, with or without adhesion promoter; and
b. The combination of aprotic solvent rinse and adhesion promoter with or without plasma treatment.

Further, it was found that in particular for substrates that have been laser roughened, the suitable viscosity of the composition and the (meth)acrylic monomer or oligomer is relevant for achieving a high pull-off strength. In this respect, it has however surprisingly be found that a relatively moderate roughening treatment leading to Ra: 0.10µm or greater and Rz: 0.50 µm or greater was already sufficient for obtaining high pull-off adhesion strengths, and that no more severe roughening treatment is required (but is of course not excluded).

The results have thus shown that the combination of a pull-off adhesion of 5 MPa or greater and a dielectric strength of 3.0 kV or higher (at 30µm coating thickness), without the need for a thermal curing step requiring elevated temperatures, can be achieved by the proper combination of components and a suitable pre-treatment of the metal substrate, and thus the present invention was completed.

## Claims

1. Composite material comprising
I) a metal substrate and
II) provided on at least a part of at least one surface of the metal substrate, a UV-crosslinkable composition for forming a crosslinked coating on the metal substrate by UV irradiation, the UV-crosslinkable composition comprising
(A) a (meth)acrylated fluoropolymer;
(B) a (meth)acrylic monomer or oligomer, preferably having a surface tension of 40 dyne/cm or less and/or a viscosity of 15 cps (at 25°C) or less;
(C) optionally, a fluorine-free (meth)acrylic polymer;
(D) optionally, an adhesion promoter;
wherein one or more of the components (A), (B), (C) and (D) comprises a group that is capable of being decomposed upon exposure to UV radiation to form radicals, and/or wherein the composition comprises a compound (E) that is capable of being decomposed upon exposure to UV radiation to form radicals.

2. The composite material according to Claim 1, wherein the (meth)acrylic monomer or oligomer (B) comprises one and preferably both of a monofunctional acrylic monomer and a di- or higher functional acrylic monomer, and/or wherein the components are present in the following amounts, expressed as weight% relative to the total weight of the composition:
(A) 10 - 45
(B) 40 - 90, preferably 50-85
(C) 0 - 30, preferably 10 - 30
(D) 0-10
(E) 0-10.

3. The composite material according to Claim 1 or 2, wherein the (meth)acrylated fluoropolymer (A) is a copolymer that comprises two or more repeating units selected from the following classes of repeating units (a-1) to (a-5), provided that the repeating units comprise at least one repeating unit selected from the class(a-1) and at least one repeating unit selected from the class (a-4):
(a-1) repeating units derived from an ethylenically unsaturated fluorinated monomer, which is preferably selected from tetrafluoroethylene, hexafluoropropylene and perfluoro(alkyl vinyl ether), which is more preferably tetrafluoroethylene;
(a-2) repeating units derived from (meth)acrylic acid and/or crotonic acid, preferably methacrylic acid and/or crotonic acid;
(a-3) repeating units derived from a C₁₋₁₆ hydroxyalkyl vinyl ether or C₁₋₁₆ hydroxyalkyl (meth)acrylate, preferably a C₁₋₈ hydroxyalkyl (meth)acrylate or C₁₋₈ hydroxyalkyl vinyl ether, more preferably a C₁₋₈ hydroxyalkyl vinyl ether;
(a-4) repeating units having an urethane (-O-CO-NH-), linkage and one or more ethylenically unsaturated groups, preferably(meth)acrylate groups;
(a-5) repeating units derived from an C_{6 - 12} aromatic (meth)acrylate or C_{6 - 12} aromatic vinyl ether.

4. The composite material according to Claim 1, 2 or 3, wherein the metal substrate is made of aluminium or an aluminium alloy and/or wherein the metal substrate, which is preferably made from aluminium or an aluminium alloy, is roughened, preferably to exhibit a surface roughness Ra of 0.2µm to 0.5µm and a peak-to-valley roughness Rz of 1.5µm to 4.0µm.

5. The composite material according to Claim 4, wherein the surface roughness of the metal substrate is obtained by laser treatment.

6. The composite material according to any one of Claims 1 to 5, wherein the optional adhesion promotor is present in an amount of from 0.1 to 5% by mass, relative to the total mass of the curable composition, and wherein the adhesion promoter is preferably selected from the group consisting of silanes optionally having epoxy or (meth)acrylic functionalities; epoxies; isocyanates; thiols; and compounds having a phosphate group, more preferably selected from the group consisting of compounds having a phosphate group and an ethylenically unsaturated group.

7. The composite material according to any one of Claims 1 to 6, wherein the UV-crosslinkable composition is solvent-free.

8. A composite material having a crosslinked coating on at least one surface of a metal substrate, which composite material is obtainable by subjecting the composite material according to any one of the preceding claims to UV irradiation.

9. The composite material according to Claim 8, wherein the crosslinked coating exhibits an adhesion of 5 MPa or greater, preferably from 5 MPa to 10 MPa, and a dielectric strength of 3.5 kV or greater, preferably 3.5 kV to 10.0 kV.

10. A method for producing a composite material as defined in Claim 8 or 9, the method comprising
i. optionally, roughening the surface of the metal substrate, preferably by laser treatment;
ii. applying the UV-crosslinkable composition for forming a crosslinked coating on the metal substrate; and
iii. irradiating the UV-crosslinkable composition with UV radiation.

11. The method for producing a composite material according to Claim 10, wherein the method further comprises, before applying the UV-crosslinkable composition, rinsing the surface of the metal substrate with a protic or aprotic solvent other than water; and/or performing a plasma treatment after the rinsing with a protic or aprotic solvent.

12. The method according to Claim 11, wherein the solvent used for rinsing the surface of the metal substrate is aprotic and is preferably an ether or ketone, and/or wherein the water content of the solvent is 100 ppm or less.

13. The composite material according to Claim 9, which is obtainable by the method as defined in any one of claims 10 to 12.

14. The composite material according to any one of Claims 1 to 9 or 13, or the method according to any one of claims 10 to 12, wherein the metal substrate is part of an electric component, preferably a secondary battery, more preferably a secondary battery for a battery-electric vehicle or hybrid electric vehicle.

15. An electric component, preferably a secondary battery, more preferably a secondary battery for a battery-electric vehicle or hybrid electric vehicle, comprising the composite material according to any one of claims 8, 9, 13 and 14.

16. A UV-crosslinkable composition for forming a crosslinked coating on the metal substrate by UV irradiation, the UV-crosslinkable composition comprising
(A) a (meth)acrylated fluoropolymer;
(B) optionally, a (meth)acrylic monomer or oligomer; preferably having a surface tension of 40 dyne/cm or less and/or a viscosity of 15 cps (at 25°C) or less;
(C) optionally, a fluorine-free (meth)acrylic polymer;
(D) an adhesion promoter;
wherein one or more of the components (A), (B), (C) and (D) comprises a group that is capable of being decomposed upon exposure to UV radiation to form radicals, and/or wherein the composition comprises a compound (E) that is capable of being decomposed upon exposure to UV radiation to form radicals;
wherein the (meth)acrylated fluoropolymer (A) is a copolymer that comprises two or more repeating units selected from the following classes of repeating units (a-1) to (a-5), provided that the repeating units comprise at least one repeating unit selected from the class(a-1) and at least one repeating unit selected from the class (a-4):
(a-1) repeating units derived from an ethylenically unsaturated fluorinated monomer, which is preferably selected from tetrafluoroethylene, hexafluoropropylene and perfluoro(alkyl vinyl ether), which is more preferably tetrafluoroethylene;
(a-2) repeating units derived from (meth)acrylic acid and/or crotonic acid, preferably methacrylic acid and/or crotonic acid;
(a-3) repeating units derived from a C₁₋₁₆ hydroxyalkyl vinyl ether or C₁₋₁₆ hydroxyalkyl (meth)acrylate, preferably a C₁₋₈ hydroxyalkyl (meth)acrylate or C₁₋₈ hydroxyalkyl vinyl ether, more preferably a C₁₋₈ vinyl ether;
(a-4) repeating units having an urethane (-O-CO-NH-) linkage and one or more ethylenically unsaturated groups, preferably (meth)acrylic groups;
(a-5) repeating units derived from an C_{6 - 12} aromatic (meth)acrylate or C_{6 - 12} aromatic vinyl ether; and
wherein the adhesion promoter is preferably selected from the group consisting of silanes optionally having epoxy and/or (meth)acrylic functionalities; epoxies; isocyanates; thiols; and compounds having a phosphate group; more preferably selected from the group consisting of compounds having a phosphate group and an ethylenically unsaturated group.
